# EUROPÄISCHE PATENTANMELDUNG

(11) **EP 4 339 715 A1**
(43) Veröffentlichungstag der Anmeldung: **20.03.2024**
(21) Anmeldenummer: 22195360.7
(22) Anmeldetag: 13.09.2022
(51) Int. Cl.: G05B 13/04, G05B 17/02, G05B 19/418

(54) **VERFAHREN ZUM ERZEUGEN EINES MATHEMATISCHEN MODELLS ZUM VORHERSAGEN VON ZUMINDEST EINEM QUALITÄTSMERKMAL EINER BAUSTOFFPLATTE**

(71) Anmelder: Siempelkamp Maschinen- und Anlagenbau GmbH, 47803 Krefeld (DE)
(72) Erfinder: RUSSKAMP, Bernd, 47877 Willich (DE); BERNARDY, Gregor, 53949 Dahlem (DE)
(74) Vertreter: Cohausz & Florack

(57) **Zusammenfassung**

Offenbart wird u.a. ein Verfahren umfassend: Einteilen einer Mehrzahl von Probedatensätzen in zumindest einen Trainingsdatensatz und zumindest einen Testdatensatz, wobei ein Probedatensatz Qualitätsparameterdaten umfasst, die zumindest einen Wert für zumindest ein entsprechendes Qualitätsmerkmal einer Baustoffplattenprobe repräsentieren, und Prozessparameterdaten, die Werte für eine Mehrzahl von Prozessparametern eines Produktionsverfahrens zum Herstellen der Baustoffplattenprobe repräsentieren; Erhalten, basierend auf dem zumindest einen Trainingsdatensatz für zumindest einen Prozessparameter des zumindest einen Trainingsdatensatzes, zumindest eines Modellkandidaten für ein mathematisches Modell zum Voraussagen zumindest eines Qualitätsmerkmals einer Baustoffplatte; Erzeugen von jeweiligen Bewertungsdaten, die zumindest einen Bewertungsparameter für den zumindest einen Modellkandidaten repräsentieren, der für den zumindest einen Testdatensatz eine Güte einer Voraussage des zumindest einen Qualitätsmerkmals durch den zumindest einen Modellkandidaten repräsentiert; Bereithalten eines Modellkandidaten als mathematisches Modell für eine Verwendung beim Herstellen einer Baustoffplatte, in einem Fall, in dem ein Bewertungsparameter für den Mödellkandidaten ein vorgegebenes Qualitätskriterium erfüllt.

## Beschreibung

### Gebiet

Beispielhafte Ausführungsformen der Erfindung betreffen Verfahren, Vorrichtungen, Systeme und Computerprogramme insbesondere zum Anpassen und/oder Erzeugen eines mathematischen Modells zum Vorhersagen von zumindest einem Qualitätsmerkmal einer Baustoffplatte.

### Hintergrund

Die kontinuierliche Herstellung von Werkstoff- und/oder Baustoffplatten, beispielsweise von Holzwerkstoffplatten umfasst üblicherweise eine Verwendung von komplexen Produktionsanlagen, die eine Mehrzahl von Einheiten oder Abschnitten umfassen, die für jeweilige Produktionsschritte vorgesehen sind. Für jede solcher Einheiten kann eine - üblicherweise große - Anzähl von Prozessparametern jeweilige Prozessbedingungen charakterisieren. So können beispielsweise im Falle einer Faserplattenerzeugung die Prozessparameter Quetschwassermenge, Hackschnitzelmenge, Temperatur Kocher, etc. kennzeichnend für Prozessbedingungen eines Prozessabschnitts der Zerfaserung einer Produktionsanlage zum Herstellen von Holzwerkstoffplatten sein.

Hierbei haben solche Prozessparameter Einfluss auf Qualitätsmerkmale von unter den entsprechenden Produktionsbedingungen produzierten Baustoffplatten, beispielsweise auf eine Querzugfestigkeit, eine Rohdichte, eine Biegefestigkeit, etc.

Angesichts einer üblicherweise sehr großen Anzahl von Prozessparametern, die Prozessbedingungen einer Produktionsanlage zur Herstellung von Baustoffplatten kennzeichnen können, hat es sich als vorteilhaft herausgestellt, mathematische Modelle zu verwenden, die einen Zusammenhang zwischen ausgewählten Prozessparametern und resultierenden Qualitätsmerkmalen beschreiben. Solche Modelle können helfen, einen Einfluss von eingestellten und/oder gemessenen Soll- oder Istwerten von Prozessparametern auf zu erwartende Qualitätsmerkmale zu berechnen, und im Falle einer produzierenden Produktionsanlage aufgrund vorliegender Soll- oder Istwerte von Prozessparametern entsprechende Qualitätsmerkmale vorauszusagen. Entsprechende Voraussagewerte können einem Bediener basierend auf vorliegenden Soll- oder Istwerten von Prozessparametern angezeigt werden, so dass der Bediener der Produktionsanlage mit entsprechenden Einstellungen der Produktionsanlage reagieren kann, um zu erwartende Qualitätsmerkmale geeignet einzustellen.

Es hat sich aber herausgestellt, dass mathematische Modelle zum Voraussagen von Qualitätsmerkmalen oft spezifisch für eine Produktionsanlage und unter Umständen spezifisch für einen zu produzierenden Plattentyp erstellt werden müssen. Dabei müssen insbesondere Prozessparameter auf denen basierend eine Voraussage erstellt werden soll, bzw. auf denen basierend das mathematische Modell erzeugt werden soll, oft mühsam durch Ausprobieren an einer Produktionsanlage durch einen Bediener bestimmt werden. Zusätzlich hat es sich gezeigt, dass nachdem ein Modell für eine Produktionsanlage und/oder einen Baustoffplattentyp erstellt wurde, sich Voraussagen durch dieses Modell im Laufe der Zeit, beispielsweise in Abhängigkeit der Jahreszeit, verschlechtern können, was eine erneute Anpassung/Erzeugung des Modells erforderlich machen kann.

Eine Aufgabe der vorliegenden Erfindung ist es vor diesem Hintergrund, Verfahren, Vorrichtungen, Systeme und Computerprogramme insbesondere zum Anpassen und/oder Erzeugen eines mathematischen Modells zum Vorhersagen von zumindest einem Qualitätsmerkmal einer Baustoffplatte bereitzustellen, die insbesondere ein Bestimmen von Prozessparametern, die dem mathematischen Modell zum Voraussagen der Qualitätsparameter verwendet werden, erleichtern.

### Zusammenfassung einiger beispielhafter Ausführungsformen der Erfindung

Gemäß einem beispielhaften Aspekt der Erfindung wird ein Verfahren offenbart, welches beispielsweise von zumindest einer Vorrichtung oder einem System aus zumindest zwei Vorrichtungen ausgeführt wird, das Verfahren umfassend:
- Einteilen einer Mehrzahl von Probedatensätzen in zumindest einen Trainingsdatensatz und zumindest einen Testdatensatz, wobei ein Probedatensatz Qualitätsparameterdaten umfasst, die zumindest einen Wert für zumindest ein entsprechendes Qualitätsmerkmal einer Baustoffplattenprobe repräsentieren, und Prozessparameterdaten, die Werte für eine Mehrzahl von Prozessparametern eines Produktionsverfahrens zum Herstellen der Baustoffplattenprobe repräsentieren;
- Erhalten, basierend auf dem zumindest einen Trainingsdatensatz für zumindest einen Prozessparameter des zumindest einen Trainingsdatensatzes, zumindest eines Modellkandidaten für ein mathematisches Modell zum Voraussagen zumindest eines Qualitätsmerkmals einer Baustoffplatte;
- Erzeugen von jeweiligen Bewertungsdaten, die zumindest einen Bewertungsparameter für den zumindest einen Modellkandidaten repräsentieren, der für den zumindest einen Testdatensatz eine Güte einer Voraussage des zumindest einen Qualitätsmerkmals durch den zumindest einen Modellkandidaten repräsentiert;
- Bereithalten eines Modellkandidaten als mathematisches Modell für eine Verwendung beim Herstellen von zumindest einer Baustoffplatte, in einem Fall, in dem ein Bewertungsparameter für den Modellkandidaten ein vorgegebenes Qualitätskriterium erfüllt.

Gemäß diesem genannten Aspekt der Erfindung werden des Weiteren offenbart:
- Ein Computerprogramm, umfassend Programmanweisungen, die einen Prozessor zur Ausführung und/oder Steuerung des Verfahrens gemäß dem genannten Aspekt der Erfindung veranlassen, wenn das Computerprogramm auf dem Prozessor ausgeführt wird. Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nichtflüchtiger oder flüchtiger) Programmspeicher des Prozessors oder ein Teil davon. Das Speichermedium kann beispielsweise ein gegenständliches oder körperliches Speichermedium sein.

Eine Vorrichtung oder ein System aus zumindest zwei Vorrichtungen, eingerichtet zur Ausführung und/oder Steuerung des Verfahrens gemäß dem genannten Aspekt der Erfindung oder umfassend jeweilige Mittel zur Ausführung und/oder Steuerung der Schritte des Verfahrens gemäß dem genannten Aspekt der Erfindung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein. Eine Vorrichtung gemäß dem genannten Aspekt der Erfindung kann beispielsweise eine Steuervorrichtung sein, die mit (zumindest mit Teilen) einer Produktionsanlage zum Herstellen von Baustoffplatten, insbesondere zum Steuern von zumindest Teilen eines Herstellungsverfahrens von Baustoffplatten, verbunden ist.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem genannten Aspekt der Erfindung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Im Folgenden werden Eigenschaften des genannten Aspekts - teilweise beispielhaft - beschrieben.

In beispielhaften Ausführungsformen kann das Verfahren gemäß dem genannten Aspekt der Erfindung, von zumindest einer Steuervorrichtung ausgeführt werden, die mit einer Produktionsanlage zum Herstellen von Baustoffplatten (direkt und/öder indirekt) verbunden ist. In einer beispielhaften Ausführungsform kann das Verfahren von einem System ausgeführt werden, das beispielsweise mehrere Steuervorrichtungen umfasst, wobei jede der Steuervorrichtungen (einige oder alle) Schritte des Verfahrens ausführt. Beispielsweise kann eine Steuervorrichtung eine Verarbeitungsanlage wie einen (oder mehrere) Computer umfassen, der (oder die) an der Produktionsanlage vorgesehen ist (oder sind) (und beispielsweise Sensordaten und/oder Daten von einer oder mehrerer Messeinrichtungen der Produktionsanlage über drahtgebundene und/oder drahtlose Kommunikationsverbindungen empfangen kann) und/oder eine mobile Vorrichtung wie ein Tablet-Computer, ein Smartphone, o.ä. die eingerichtet ist, zumindest Teile des Verfahrens durchzuführen, und die beispielsweise über eine drahtlose Kommunikationsverbindung mit der Verarbeitungsanlage und/oder der Produktionsanlage verbunden ist. Wie weiter in der vorliegenden Spezifikation offenbart, ist das Verfahren gemäß dem genannten Aspekt der vorliegenden Erfindung in beispielhaften Ausführungsformen ein Verfahren zum Anpassen und/oder Erzeugen eines mathematischen Modells zum Vorhersagen von zumindest einem Qualitätsmerkmal einer Baustoffplatte.

Die Herstellung von Baustoffplatten, die in Fachkreisen teilweise auch einfach "Werkstoffplatten" genannt werden, findet entweder taktgebunden oder kontinuierlich statt. Bei einer taktgebundenen Herstellung werden die Baustoffplatten als flächenförmige Gegenstände mit in allen drei Raumrichtungen endlichen Abmaßen erzeugt, während die Baustoffplatten die in einem kontinuierlichen Prozess erzeugt werden, Ablängungen einer lediglich in zwei Raumrichtungen endliche Abmaße aufweisenden Bahnware darstellen. Dabei gibt die Arbeitsweise der Füge- und/oder Verdichtungseinheit vor, ob der Gesamtprozess als taktgebundenes oder kontinuierliches Verfahren beschrieben wird, da im Falle einer sogenannten taktgebundenen Herstellungsweise die die der Verdichtung vorgelagerten Prozessabschnitte, wie beispielsweise die Streuung, häufig ebenfalls als kontinuierliche Teilprozesse ausgelegt sind. Da in den Verdichtungseinheiten, respektive den kombinierten Füge-und Verdichtungseinheiten im Allgemeinen bei der Baustoffplattenerzeugung auch mit nennenswerten Drücken gearbeitet wird, werden diese Einheiten vom Fachmann meist mit Bezug auf eine Gesamtanlage als "Pressenteil" bezeichnet. Bei der Erzeugung von Baustoffplatten i.S.d. vorliegenden Schrift liegen die Arbeitsdrücke hier, abhängig von Material und Größe der zu erzeugenden Werkstoffplatte, meist in Bereichen zwischen etwa 50 N/cm² und ca. 500 N/cm² und dort vorteilhafterweise zwischen 100 N/cm² und 400 N/cm², wenngleich sie im Bereich der Erzeugung von zur Dämmung dienenden Baustoffplatten, so genannten Dämmplatten, bei sehr geringen Dichten auch geringer als 50 N/cm² ausfallen können.

Sowohl in wirtschaftlicher Hinsicht, wie im Hinblick auf ihre technische Einsatzfähigkeit nehmen wenigstens eine, einen naturbasierten Faseranteil aufweisende, Schicht aufweisende Baustoffplatten, unter den Baustoffplatten einen besonderen Stellenwert ein. Unter naturbasierten Fasern bzw. Faseranteilen werden im Sinne der vorliegenden Schrift Fasern und Faseranteile verstanden, die einen natürlichen Ursprung haben, also dem Ursprung nach einer Einjahrespflanze oder einer Mehrjahrespflanze entstammen, unabhängig davon, ob die Fasern oder Faseranteile als reine Fasern bspw. zur Produktion von MDF- / HDF-Platten oder deren Schichttypen vorliegen oder Bestandteile von Spänen, Langspänen oder Wafern bilden, die klassischerweise zur Produktion von Span- oder OSB-Platten oder deren Schichttypen dienen. Der im Weiteren auch verwendete Begriff "Holzpartikel" beinhaltet also stets wenigstens naturbasierte Fasern oder Faseranteile.

Derartige Baustoffplatten werden vom Fachmann häufig auch einfach "Holz-Baustoffplatten" genannt, selbst wenn sie eine oder weitere Schichten aufweisen, die nicht auf einem, aus einer Mehrjahrespflanze gewonnenem Rohmaterial basieren. Selbst Baustoffplatten, die lediglich eine oder mehrere Schichten umfassen, die wenigstens anteilig aus, aus Einjahrespflanzen gewonnenen Fasern und/oder Faseranteilen bestehen, werden meist Holz-Baustoffplatten und nur äußerst selten ganz korrekt als "Bast- oder Gras-Baustoffplatten" bezeichnet.

Solche Holz-Baustoffplatten werden in den unterschiedlichsten Ausführungsformen für unterschiedliche Anwendungszwecke hergestellt. Besonders weit verbreitet sind Spanplatten, OSB-Platten und MDF- (Mitteldichte Faserplatten) oder HDF-Platten (Hochdichte Faserplatten), sowie aus einzelnen Schichten derartiger Verbunde aufgebaute Hybridplatten. Die Benennung der Baustoffplatten hängt dabei von Form und Größe der zum Platten- respektive zum Schichtaufbau verwendeten Fasern bzw. Partikel ab. Von einer Spanplatte spricht der Fachmann, wenn diese aus "feinen" Holzpartikeln erzeugt wird, von einer OSB-Platte dagegen, wenn diese aus "groben" Holzpartikeln erzeugt ist. Unter "feinen" Holzpartikeln versteht der Fachmann im Allgemeinen Partikel, deren maximale Ausdehung in einer Raumrichtung nicht 60 mm überschreitet, meist werden diese als Späne beschriebenen Partikel sogar mit einer maximalen Ausdehnung von höchsten 25 mm oder gar 20 mm ausgebildet. Unter "groben" Holzpartikeln versteht der Fachmann im Allgemeinen Partikel, deren maximale Ausdehung in einer Raumrichtung mindestens 60 mm beträgt, meist werden diese als Langspäne beschriebenen Partikel sogar mit einer maximalen Ausdehnung von höchsten 60 mm bis 185 mm, insbesondere von 80 mm bis 140 mm ausgebildet.

MDF- und HDF-Platten, beziehungsweise deren einzelne Schichten, sind dagegen aus (mitteldicht- oder hochdicht verpressten) Fasern gebildet, die meist unter Zwischenschaltung eines chemischen Prozesses, meist einer Art Kochprozess, aus dem Rohmaterial gewonnen werden.

Hybridplatten bestehen aus mehreren Schichten unterschiedlicher Arten und sind häufig dann besonders gut geeignet, wenn die Werkstoffplatte für ihren Einsatzzweck verschiedenen Anforderungen gerecht werden muss.

Derartige Baustoffplatten werden auch dann noch als Holz-Baustoffplatten bezeichnet, wenn sie einzelne Schichten umfassen, die keine Anteile von naturbasierten Fasern und/oder Faseranteilen aufweisen. Meist handelt es sich dann um kaschierte Baustoffplatten, also Holz-Baustoffplatten, die einseitig oder beidseitig außen kaschiert sind. Zur Kaschierung finden meist Kunststoffe Anwendung. Besonders bekannt sind dabei so genannte beschichtete Spanplatten.

Die genannten Arten und Typen von Holz-Baustoffplatten werden also aus Holzpartikeln (Spänen, Langspänen oder Fasern) unterschiedlicher Form und Größe hergestellt, wobei die Holzpartikel durch Stimmulierung eigener Adhäsionsmechanismen und Zugabe von Klebstoffen (i.d.R. eines Leimes) im sogenannten Pressenteil einer Baustoffplattenerzeugungsanlage unter Einwirkung von Druck und Temperatur verbunden werden.

In jüngerer Zeit ist man bestrebt neben den zum Nachwachsen viele Jahre benötigenden Holzwerkstoffen auch Einjahrespflanzen, insbesondere grasartige Pflanzen, zur Produktion von Baustoffplatten zu benutzen. Diese Einjahrespflanzen haben den großen Vorteil des schnellen Wachstums. Somit ist ihre Verwendung besonders Ressource schonend, und passt besser in das sich weltweit vermehrt ausbildende Umweltbewusstsein. Zudem erfordert der zunehmende Wohlstand in vielen, beispielsweise asiatischen Ländern, die Deckung eines großen Bedarfs an Baustoffplatten für den Wohnungsbau, insbesondere den Wohungsinnenausbau oder auch für den Möbelbau.

Da Einjahrespflanzen nicht verrinden, bilden ihre Ernteprodukte produktionstechnisch betrachtet zunächst einen homogenes Rohmaterial, dessen Fasern für die Baustoffplattenproduktion durch einen Aufspleißungsprozess gewonnen werden können.

Allerdings gestaltet sich die Verarbeitung von Einjahrespflanzen deutlich komplizierter als die auf Holzpartikeln basierenden Baustoffplatten. So bildet die hohe Ausscheidung von im Herstellungsprozess abrasiv auf den Anlagenbau wirkender Silikate ein großes Hemmnis. Dies erfordert insbesondere hinsichtlich des Anlagebaus deutlich erhöhten Aufwand, beispielsweise durch zusätzliche Prozessschritte, der Armierung bestimmter Anlageteile und einem erhöhten Ersatzteilbedarf. Zudem besteht die Gefahr von Produktionsstillständen.

Nicht zuletzt unterscheiden sich insbesondere auch die mechanischen Eigenschaften von aus Einjahrespflanzen hergestellten Partikeln basierenden Platten(-schichten) zu denjenigen aus auf Holzpartikeln basierenden Pendants erheblich.

Aus der Vielzahl der aufeinander aufbauenenden Prozessabschnitte, der Varianz der Anforderungen an die einzelnen Prozessabschnitte abhängig von den herzustellenden Baustoffplattentypen und deren gewünschter Eigenschaften, sowie der innerhalb eines Prozessabschnitts auf die Qualität der zu erzeugenden Baustoffplatte einwirkenden Parametern ergiben sich beinahe beliebig komplexe Abhängigkeitsstrukturen.

Ein Baustoff umfasst in beispielhaften Ausführungsformen einen Holzwerkstoff, einen Dämmstoff, und/oder einen oder mehrere Rohstoffe wie Reisstroh, Bagasse, Bambus, Hanf, Ölpalme. Beispielhafte Baustoffplatten umfassen Spanplatten, Grobspan-, bzw. OSB-Platten und/oder MDF-Platten.

Im Sinne der vorliegenden Offenbarung sind unter dem Begriff Baustoffplatten Platten zu verstehen, die beispielsweise zumindest einen großen Anteil (zum Beispiel mehr als 25 Gew.-%) an zumindest einem der genannten Baustoffe enthalten, im Falle von Holzwerkstoffplatten beispielsweise zumindest einen großen Anteil (zum Beispiel mehr als 50 Gew.-%, insbesondere mehr als 75 Gew.-%, beispielsweise wenigstens 80 Gew.-%) an zellulosehaltigem, beispielsweise lignozellulosehaltigem, Material, beispielsweise Holzspäne, aufweisen. Solche Baustoffplatten können weitere Materialien wie Kunststoffmaterialien umfassen, die beispielsweise zumindest teilweise in Partikel- und/oder Faserform vorliegen können.

Eine Produktionsanlage zur Herstellung von Baustoffplatten kann somit insbesondere eine Produktionsanlage zur Herstellung von Holzwerkstoffplatten (oder Holz-Ersatz-Baustoffplatten) umfassen. Solche Produktionsanlagen umfassen üblicherweise mehrere Produktionseinheiten oder -Abschnitte, beispielsweise einen Abschnitt (beispielsweise einen Bunker) zum Lagern, Entrinden und/oder Hacken, einen Abschnitt zur Hackschnitzelwäsche, einen Abschnitt zur Zerfaserung und/oder Zerspanung und Beleimung, einen Abschnitt zur Faser- und/oder Spantrocknung, einen Abschnitt zur Mattenformung, und/oder einen Abschnitt zur Heißverpressung.

Produktionsbedingungen insbesondere bei einzelnen Abschnitten und/oder Einheiten der Produktionsanlage können durch entsprechende Prozessparameter charakterisiert werden/sein. Hierbei versteht sich, dass Prozessparameter im Sinne der vorliegenden Offenbarung insbesondere Istwerten und/oder Sollwerten entsprechen. So weist die Produktionsanlage in beispielhaften Ausführungsformen zumindest einen Sensor und/oder zumindest eine Messeinrichtung auf. Beispielsweise kann die Produktionsanlage ein oder mehrere Drucksensoren, Temperatursensoren und/oder Feuchtigkeitssensoren aufweisen. Die Produktionsanlage kann weiter beispielsweise eine oder mehrere Messeinrichtungen zum Vermessen von Eigenschaften der Baustoffplatten, beispielsweise zum Vermessen von Eigenschaften von Holzspänen, umfassen. Es versteht sich aber, dass die vorliegende Offenbarung nicht auf solche Sensoren und/oder Messeinrichtungen beschränkt ist. Insbesondere weist die Produktionsanlage zumindest einen Produktionsabschnitt auf, der zumindest einen Sensor aufweist. Beispielsweise kann ein Pressabschnitt einen Drucksensor aufweisen, wobei entsprechende Druckmesswerte dem Prozessparameter Druck entsprechen können. Alternativ oder zusätzlich kann ein eingestellter Sollwert des Drucks am entsprechenden Pressabschnitt dem Prozessparameter Druck entsprechen.

Mit anderen Worten wird das Verfahren in einer beispielhaften Ausführungsform durch eine Steuervorrichtung einer Pröduktionsanlage oder durch ein System, das eine solche Steuervorrichtung umfasst, ausgeführt, wobei die Produktionsanlage zumindest einen Sensor und/oder zumindest eine Messeinrichtung aufweist, der, bzw. die eingerichtet ist, zumindest einen Sensormesswert und/oder einen Messwert der zumindest einen Messeinrichtung als Soll- oder Istwert eines entsprechenden Prozessparametes auszugeben, und der eine entsprechende Prözessbedingung beim Herstellen der zumindest einen Baustoffplatte durch die Produktionsanlage charakterisiert.

Beispielhafte, die vorliegende Offenbarung nicht einschränkende Prozessparameter insbesondere des Abschnitts zur Zerfaserung und Beleimung können eine Quetschwassermenge, eine Dampfzugabe eines Kochers, ein Füllstand des Kochers, eine Temperatur des Kochers, ein Dampfdruck des Kochers, eine Kochzeit mit dem Kocher, eine Hackschnitzelmenge, eine Leimzugabe oder Paraffinzugabe, etc., umfassen. Beispielhafte, die vorliegende Offenbarung nicht einschränkende Prozessparameter insbesondere des Abschnitts zur Mattenformung können eine Faseraustragsmenge, eine Streuhöhe, eine Formbandgeschwindigkeit, ein Flächengewicht der Matte, eine Mattenfeuchte, eine Streubreite, ein Vorpressdruck, eine Vorpressdistanz, eine Besäumungsbreite, eine Mattendichte, eine Sprühwassermenge, etc., umfassen. Es versteht sich, dass für weitere Einheiten und/oder Abschnitte einer Produktionsanlage eigene Prozessparameter existieren, die entsprechende Produktionsbedingungen dieser weiteren Einheiten und/oder Abschnitte charakterisieren.

Die Produktionsbedingungen, die bei einer Produktionsanlage zum/beim Herstellen einer Baustoffplatte herrschen/eingestellt sind, haben zumindest teilweise einen Einfluss auf Eigenschaften der produzierten Baustoffplatte. Solche Eigenschaften einer Baustoffplatte können insbesondere durch Qualitätsmerkmale, bzw. Qualitätsparameter, charakterisiert werden. Im Sinne der vorliegenden Offenbarung können Qualitätsmerkmale, bzw. Qualitätsparameter, insbesondere eine Querzugfestigkeit, eine Rohdichte, eine Biegefestigkeit und/oder eine Dickenquellung umfassen, wobei diese Beispiele nicht als einschränkend zu verstehen sind. So können weitere Qualitätsmerkmale, bzw. Qualitätsparameter, vorgesehen sein.

Eine Produktionsanlage kann über geeignete Sensoren und/oder Messeinrichtungen an verschiedenen Produktionsabschnitten verfügen, so dass Produktionsbedingungen beim Herstellen einer Baustoffplatte an den verschiedenen Produktionsabschnitten festgehalten werden können, und einer produzierten Baustoffplatte zugeordnet werden können. So können Sensordaten und/oder Messdaten einer Messeinrichtung mit einem entsprechenden Zeitstempel einer produzierten Baustoffplatte zugeordnet als Datensatz gespeichert werden. Solche zeitlich zugeordneten Datensätze/Datenvektoren enthalten die Prozessbedingungen oder Prozesszustände, unter denen die entsprechende Baustoffplatte entstanden ist.

In regelmäßigen Zeitabschnitten werden typischerweise produzierte Baustoffpatten oder Teile davon nach dem Produktionsprozess ausgeschleust, um für diese ausgeschleusten Baustoffplatten entsprechende Qualitätsmerkmale, bzw. Qualitätsparameter, beispielsweise in einem Labor oder durch einen Testroboter zu vermessen. Auf diese Weise können Probedatensätze erhalten werden, die für eine Baustoffplattenprobe (ganze Patte oder Teil davon) Qualitätsparameterdaten, die zumindest einen Wert (z.B. einen Messwert, der für eine entsprechende Baustoffplattenprobe in einem Labor gemessen wurde) für zumindest ein entsprechendes Qualitätsmerkmal einer Baustoffplattenprobe repräsentieren, und Prozessparameterdaten, die Werte (oder Prozessparameterwerte, z.B. einen oder mehrere Soll- oder Istwerte für jeweils einen Prozessparameter, z.B. erhalten durch einen entsprechenden Sensor, eine entsprechende Messeinrichtung, und/oder durch eine entsprechende Einstelleinrichtung der Produktionsanlage) für eine Mehrzahl von Prozessparametern eines Produktionsverfahrens zum Herstellen der Baustoffplattenprobe repräsentieren, umfassen. Hierbei können die Prozessparameter der Mehrzahl von Prozessparametern in beispielhaften Ausführungsformen zeitlich zugeordneten Prozessparameterwerten entsprechen, die einen Zeitstempel umfassen. Der Zeitstempel entspricht dem Zeitpunkt, für den ein Prozessparameterwert eine Prozessbedingung charakterisiert, die während der Produktion einer produzierten Baustoffplatte vorlag.

In beispielhaften Ausführungsformen umfasst das Verfahren einen Schritt des Bereithaltens (z.B. des Speicherns) zumindest eines Probedatensatzes auf einem Speichermedium, das mit der Produktionsanlage verbunden ist, oder für eine Verbindung mit der Produktionsanlage vorgesehen ist, und auf das die zumindest eine Steuervorrichtung zugreifen kann.

Basierend auf den Probedatensätzen ist es möglich, den Herstellungsprozess eines Baustoffplattentyps für eine Produktionsanlage zu modellieren. In beispielhaften Ausführungsformen kann es beispielsweise möglich sein, insbesondere für mehrere Probedatensätze den Prozessparametern entsprechende Koeffizienten oder Gewichte eines mathematischen Modells zuzuordnen, und diese in entsprechenden Gleichungssystemen des mathematischen Modells basierend auf den gemessenen Qualitätsmerkmalen zu bestimmen. Dies kann sukzessive für immer weitere Probedatensätze erfolgen (beispielsweise immer, wenn neue Probedatensätze während des Produktionsverlaufs erhalten werden), so dass das mathematische Modell mit weiteren Probedatensätzen "lernt" und so "trainiert" werden kann.

In beispielhaften Ausführungsformen umfasst ein mathematisches Modell einen Satz von Modellkoeffizienten für eine oder mehrere mathematische Gleichungen. Insbesondere umfasst in beispielhaften Ausführungsformen ein mathematisches Modell einen Satz von Modellkoeffizienten für eine oder mehrere mathematische Gleichungen, wobei die eine mathematische Gleichung oder die mehreren mathematischen Gleichungen mit den Modellkoeffizienten so vorgesehen sind, dass die eine mathematische Gleichung oder die mehreren mathematischen Gleichungen, basierend auf einer Eingabe von Werten aus zumindest einem Datensatz, der Werte für Prozessparameter mit zugehörigem Zeitstempel umfasst, einen Wert (einen zu erwartenden Wert) für zumindest einen Qualitätsparameter ausgeben kann oder können.

Mit anderen Worten können beispielsweise während der Herstellung von Baustoffplatten eingestellte und/oder gemessene Soll- und/oder Istwerte von Prozessparametern der Produktionsanlage an die zumindest eine Steuervorrichtung übermittelt werden, die dazu über geeignete Kommunikationsverbindungen mit der Produktionsanlage verbunden ist. Mit den so erhaltenen Werten der Prozessparameter kann die zumindest eine Steuervorrichtung mittels des mathematischen Modells Voraussagewerte für Qualitätsmerkmale berechnen, die für die gerade produzierten Baustoffplatten aufgrund der eingestellten und/oder gemessenen Soll- und/oder Istwerten zu erwarten sind. Diese Voraussagewerte können einem Bediener der Produktionsanlage angezeigt werden, so dass dieser, falls nötig, über eine Nachjustierung von Prozessparametern Einfluss auf die zu erwartenden Qualitätsmerkmale nehmen kann. Zusätzlich oder alternativ können basierend auf den Voraussagedaten Steuersignale erzeugt werden, basierend auf denen die zumindest eine Steuervorrichtung Prozessparameter zum Herstellen der zumindest einen Baustoffplatte entsprechend nachjustieren kann.

In beispielhaften Ausführungsformen umfasst das mathematische Modell ein statistisches Modell oder entspricht einem statistischen Modell. Insbesondere liegt in einer beispielhaften Ausführungsform dem mathematischen Modell ein sogenanntes Modell für interdependente simultane stochastische lineare Gleichungen zugrunde. Es hat sich gezeigt, dass zur Modellierung der Produktionsprozesse für Baustoffplatten beispielsweise Regressionsmodelle für interdependente Systeme simultaner (linearer) stochastischer Gleichungen geeignet sein können. Insbesondere die Prozesse in der Holzwerkstoffindustrie können als interdependent und simultan angesehen werden, da mehrere Produkteigenschaften gleichzeitig und nicht unabhängig voneinander entstehen sowie gegenseitige Abhängigkeiten der Einflussgrößen bzw. Prozessparameter untereinander bestehen. Die Modellgleichungen können als linear beschrieben werden, da die Modellkoeffizienten linear eingehen. Es versteht sich aber, dass die vorliegende Offenbarung nicht auf solche linearen Systeme beschränkt ist. Beispielsweise können Prozessparameter auch mit einem quadratischen, kubischen oder exponentiellen (oder anderen) Gewicht einfließen.

Somit umfasst das mathematische Modell in beispielhaften Ausführungsformen ein simultanes Gleichungsmodell, insbesondere ein auf dem Dreistufigen-Kleinste-Quadrate-Verfahren ("Three-stage least squares", "3SLS") basierendes mathematisches Modell. In beispielhaften Ausführungsformen umfasst das mathematische Modell weiter ein auf dem Zweistufigen-Kleinste-Quadrate-Verfahren ("Two-stage least squares", "2SLS") basierendes mathematisches Modell, ein auf dem Partial-Least-Squares (PLS) basierendes mathematisches Modell, und/oder ein lineares Regressionsmodell (Linear Regresssion Model).

Gemäß dem genannten beispielhaften Aspekt der vorliegenden Erfindung umfasst das Verfahren ein Einteilen einer Mehrzahl von Probedatensätzen in zumindest einen Trainingsdatensatz und zumindest einen Testdatensatz, wobei ein Probedatensatz Qualitätsparameterdaten umfasst, die zumindest ein Qualitätsmerkmal einer Baustoffplattenprobe repräsentieren, und Prozessparameterdaten, die eine Mehrzahl von Prozessparametern eines Produktionsverfahrens zum Herstellen der Baustoffplattenprobe repräsentieren. Dabei umfasst das Verfahren in beispielhaften Ausführungsformen ein Bereithalten der Mehrzahl von Probedatensätzen, beispielsweise auf einem Speichermedium mit dem die zumindest eine Steuervorrichtung verbunden ist und/oder auf das die zumindest eine Steuervorrichtung zugreifen kann. Ein Prozessparameter repräsentiert eine entsprechende Prozessbedingung eines Produktionsverfahrens zum Herstellen einer Baustoffplatte.

Es versteht sich, dass Daten im Sinne der vorliegenden Offenbarung, beispielsweise die Qualitätsparameterdaten, die Prozessparameterdaten und/oder Daten, die im Folgenden offenbart sind, jedwede Art von Informationen umfassen, die von einer Verarbeitungsvorrichtung, wie von der zumindest einen Steuervorrichtung, einem Prozessor, einem System von einem oder mehreren Prozessoren, und/oder einem oder mehreren Computern, gelesen und/oder verarbeitet werden können, und die insbesondere zu diesem Zweck auf einem Speichermedium gespeichert werden können, das mit der zumindest einen Steuervorrichtung, dem Prozessor, mit dem System von einem oder mehreren Prozessoren, und/oder mit dem einen oder den mehreren Computern geeignet direkt und/oder indirekt (z.B. direkt, drahtgebunden oder drahtlos) verbunden ist.

Gemäß dem genannten Aspekt der vorliegenden Erfindung wird somit eine vorgegebene Anzahl von Probedatensätzen (zumindest zwei) aufgeteilt in zumindest einen Testdatensatz und zumindest einen Trainingsdatensatz. Dabei wird der zumindest eine Trainingsdatensatz verwendet, um das mathematische Modell, insbesondere wie beschrieben, zu trainieren. So können in einer beispielhaften Ausführungsform bestehende Koeffizienten oder Gewichte eines mathematischen Modells oder neue Koeffizienten oder Gewichte für ein mathematisches Modell Prozessparametern des zumindest einen Trainingsdatensatz zugeordnet werden, und basierend auf dem zumindest einen Qualitätsmerkmal des zumindest einen Trainingsdatensatzes angepasst oder erzeugt werden.

Gemäß dem genannten beispielhaften Aspekt der vorliegenden Erfindung umfasst das Verfahren somit weiter einen Schritt des Erhaltens, basierend auf dem zumindest einen Trainingsdatensatz für zumindest einen Prozessparameter, in beispielhaften Ausführungsformen für jeweilige Gruppen von Prozessparametern, des zumindest einen Trainingsdatensatzes, zumindest eines Modellkandidaten für ein mathematisches Modell zum Voraussagen zumindest eines Qualitätsmerkmals einer Baustoffplatte (beispielsweise zum Erhalten eines Voraussagewerts für zumindest ein Qualitätsmerkmal einer Baustoffplatte). Mit anderen Worten entspricht ein Modellkandidat dem mathematischen Modell, das für zumindest einen Prozessparameter zum Voraussagen des zumindest einen Qualitätsmerkmals der zumindest einen Baustoffplatte erhalten wird. Ein Modellkandidat kann beispielsweise ein aufgrund der Parameter des zumindest einen Trainingsdatensatzes trainiertes mathematisches Modell sein.

Um den zumindest einen Modellkandidaten zu erhalten, ist die Vorrichtung gemäß dem genannten Aspekt der Erfindung, beispielsweise die zumindest eine Steuervorrichtung, in einer beispielhaften Ausführungsform eingerichtet, den zumindest einen Modellkandidaten zu erzeugen, beispielsweise durch Trainieren des mathematischen Modells basierend auf dem zumindest einen Trainingsdatensatz für den zumindest einen Prozessparameter. Mit anderen Worten umfasst der Schritt des Erhaltens des zumindest einen Modellkandidaten in beispielhaften Ausführungsformen ein Erzeugen des zumindest einen Modellkandidaten basierend auf dem zumindest einen Trainingsdaterisatz für den zumindest einen Prozessparameter, beispielsweise durch Trainieren des mathematischen Modells basierend auf dem zumindest einen Trainingsdatensatz für den zumindest einen Prozessparameter.

Allerdings ist die vorliegende Offenbarung nicht auf diese beispielhafte Ausführungsform beschränkt. So kann der Schritt des Erhaltens des zumindest einen Modellkandidaten in beispielhaften Ausführungsformen zusätzlich oder alternativ ein Empfangen des zumindest einen Modellkandidaten beispielsweise von einer mit der zumindest einen Steuervorrichtung (direkt oder indirekt) verbundenen Vorrichtung umfassen. In diesen beispielhaften Ausführungsformen die mit der zumindest einen Steuervorrichtung verbundene Vorrichtung zusätzlich oder alternativ zu der zumindest einen Steuervorrichtung eingerichtet, den zumindest einen Modellkandidaten zu erzeugen, beispielsweise durch Trainieren des mathematischen Modells basierend auf dem zumindest einen Trainingsdatensatz für den zumindest einen Prozessparameter.

Der zumindest eine Testdatensatz wird verwendet, um eine Qualität einer Voraussage des aufgrund der Parameter des zumindest einen Trainingsdatensatzes trainierten mathematischen Modells (des Modellkandidaten) zu bewerten.

Dazu kann beispielsweise der Modellkandidat verwendet werden, um basierend auf den Prozessparametern des zumindest einen Testdatensatzes das entsprechende zumindest eine Qualitätsmerkmal des zumindest einen Testdatensatzes vorauszusagen, und ein entsprechend erhaltener Voraussagewert kann mit dem tatsächlich in dem zumindest einen Testdatensatz enthaltenen zumindest einen Qualitätsmerkmal verglichen werden. Wie weiter hierin offenbart, kann aufgrund einer solchen Bewertung entschieden werden, ob ein Modellkandidat (ein Kandidat für ein mathematisches Modell) als mathematisches Modell für eine Verwendung beim Herstellen einer Baustoffplatte bereitgehalten (beispielsweise gespeichert) wird. Beispielsweise kann ein Modellkandidat aufgrund einer solchen Bewertung für diese Verwendung bereitgehalten werden, wenn ein entsprechender Bewertungsparameter ein entsprechendes Qualitätskriterium erfüllt und kann andernfalls verworfen werden.

Im Einklang mit dem genannten Aspekt der vorliegenden Erfindung umfasst das Verfahren somit einen Schritt des Erzeugens von jeweiligen Bewertungsdaten, die zumindest einen Bewertungsparameter, beispielsweise ein Rating, für den zumindest einen Modellkandidaten repräsentieren, wobei der zumindest eine Bewertungsparameter für den zumindest einen Testdatensatz eine Güte (oder Qualität) einer Voraussage des zumindest einen Qualitätsmerkmals durch den zumindest einen Modellkandidaten repräsentiert.

Im Einklang damit umfasst das Verfahren in einer beispielhaften Ausführungsform:
- Erhalten für den zumindest einen Testdatensatz eines entsprechenden Voraussagewerts für das zumindest eine Qualitätsmerkmal durch den zumindest einen Modellkandidaten;
- Bestimmen zumindest eines Parameters, der eine Differenz zwischen dem Voraussagewert für das zumindest eine Qualitätsmerkmal und einem Qualitätswert, der das zumindest eine Qualitätsmerkmal repräsentiert, charakterisiert;
- Bestimmen des Bewertungsparameters basierend auf dem zumindest einen Parameter.

Hierbei kann es vorteilhaft sein, eine Voraussage durch einen Modellkandidaten anhand von mehr als einem Testdatensatz zu bewerten. Entsprechend umfasst das Verfahren in einer beispielhaften Ausführungsform:
- Erhalten, von Informationen, beispielsweise basierend auf einer Eingabe über eine Benutzerschnittstelle, die eine vorgegebene Anzahl von Testdatensätzen repräsentieren, wobei der Schritt des Einteilens der Mehrzahl von Probedatensätzen in zumindest einen Trainingsdatensatz und zumindest einen Testdatensatz umfasst:
- Einteilen der Mehrzahl von Probedatensätzen in zumindest einen Trainingsdatensatz und zumindest einen Testdatensatz (z.B. in eine Anzahl von Testdatensätzen), wobei eine Anzahl von Testdatensätzen, der vorgegebenen Anzahl von Testdatensätzen entspricht.

Es versteht sich, dass Informationen im Sinne der vorliegenden Offenbarung, beispielsweise die Informationen, die eine vorgegebene Anzahl von Testdatensätzen repräsentieren und/oder die Informationen, die im Folgenden offenbart sind, jedwede Art von computerlesbarer und/oder elektronisch lesbarer Information umfassen, die von einer Verarbeitungsvorrichtung, wie von der zumindest einen Steuervorrichtung, einem Prozessor, einem System von einem oder mehreren Prozessoren, und/oder einem oder mehreren Computern, gelesen und/oder verarbeitet werden können.

In einer beispielhaften Ausführungsform kann somit beispielsweise ein Benutzer eine Anzahl von Testdatensätzen festlegen. Diese Flexibilität, die das Verfahren in dieser Ausführungsform vorsieht, hat sich als vorteilhaft herausgestellt, da hier insbesondere die Erfahrung, die ein Benutzer mit der Produktionsanlage hat, mit einfließen kann. In beispielhaften Ausführungsformen umfasst der zumindest eine Parameter einen statistischen Parameter, der ausgewählt ist aus:
- Maximaler Fehler;
- Mittlerer absoluter Fehler;
- Quadratischer Fehler.

In einer beispielhaften Ausführungsform umfasst das Verfahren:
- Erhalten, basierend auf einer Eingabe über eine Benutzerschnittstelle, von Informationen, die einen Bewertungsschwellwert repräsentieren, wobei ein Modellkandidat das vorgegebene Qualitätskriterium erfüllt, wenn der Bewertungsparameter für den Modellkandidaten über dem Bewertungsschwellwert liegt, wenn der Bewertungsschwellwert ein Minimalwert ist, oder wenn der Bewertungsparameter für den Modellkandidaten unter dem Bewertungsschwellwert liegt, wenn der Bewertungsschwellwert ein Maximalwert ist.

Über die Freiheit, in dieser beispielhaften Ausführungsform den Bewertungsschwellwert bestimmen zu können, erhält ein Benutzer beispielsweise eine Möglichkeit, indirekt Einfluss zu nehmen, wie viele Modellkandidaten (entsprechend jeweiligen Prozessparametern) beim Vergleich in Betracht gezogen werden, wodurch einem Benutzer ein weiterer Freiheitsgrad und weitere Flexibilität zur Verfügung gestellt wird, wodurch insbesondere technische Erfahrung des Benutzers mit einfließen kann.

Im Unterschied zu anderen Voraussageverfahren sieht der genannte Aspekt der vorliegenden Erfindung es somit vor, dass eine Voraussagequalität des mathematischen Modells nicht beispielsweise nur aufgrund von statistischen Parametern bestimmt wird, sondern durch Vergleich der Voraussage mit tatsächlich erzielten Werten. Es hat sich herausgestellt, dass so ein mathematisches Modell zum Voraussagen von Qualitätsmerkmalen für eine Produktionsanlage in vorteilhafter Weise angepasst werden kann.

Gemäß dem genannten Aspekt der vorliegenden Erfindung umfasst das Verfahren Bereithalten eines Modellkandidaten als mathematisches Modell für eine Verwendung beim Herstellen einer Baustoffplatte, in einem Fall, in dem ein Bewertungsparameter für den Modellkandidaten ein vorgegebenes Qualitätskriterium erfüllt. Hierbei umfasst Bereithalten eines Modellkandidaten als mathematisches Modell für eine Verwendung beim Herstellen einer Baustoffplatte in beispielhaften Ausführungsformen ein speichern des Modellkandidaten als mathematisches Modell auf einem mit der Produktionsanlage verbundenen oder mit einem zur Verbindung mit der Produktionsanlage vorgesehenen Speichermedium, auf das die zumindest eine Steuervorrichtung zugreifen kann.

Während ein Probedatensatz für eine Baustoffplattenprobe Ist- und/oder Sollwerte für eine Vielzahl von Prozessparametern (z.B. Druck bei einem bestimmten Produktionsabschnitt, Temperatur bei einem bestimmten Produktionsabschnitt, Feuchtigkeit bei einem bestimmten Produktionsabschnitt, etc.) enthalten kann, wird gemäß dem genannten Aspekt der vorliegenden Erfindung ein Modellkandidat als mathematisches Modell für die Verwendung beim Herstellen einer Baustoffplatte bereitgehalten, mit dem eine Voraussage des zumindest einen Qualitätsmerkmals einer Baustoffplatte nicht unter Verwendung aller Prozessparameter erfolgt, für die in den Probedatensätzen Soll- und/oder Istwerte gespeichert sind, sondern unter Verwendung des zumindest einen Prozessparameters für den der Modellkandidat einen Bewertungsparameter erzielt, der das vorgegebene Qualitätskriterium erfüllt. Auf diese Weise wird es möglich, einerseits Qualitätskriterien basierend auf einem mathematischen Modell vorauszusagen, und andererseits dabei den zumindest einen Prozessparameter zu verwenden, für den die Voraussage das vorgegebene Qualitätskriterium erfüllt.

In beispielhaften Ausführungsformen umfasst der Schritt des Erhaltens des zumindest einen Modellkandidaten ein Erhalten von zumindest zwei Modellkandidaten, wobei ein jeweiliger Modellkandidat für zumindest einen jeweiligen ausgewählten Prozessparameter des zumindest einen Trainingsdatensatzes erhalten wird. Mit anderen Worten ist es in beispielhaften Ausführungsformen möglich, dass ein Satz oder mehrere Sätze von Modellkandidaten erhalten werden, wobei ein Modellkandidat für einen entsprechenden oder für mehrere entsprechende Prozessparameter erhalten wird. So kann beispielsweise ein Modellkandidat für den Prozessparameter "Temperatur Kocher" im Prozessabschnitt Zerfaserung und Beleimung erhalten werden und ein Modellkandidat für den Prozessparameter "Dampfdruck Kocher" im selben Prozessabschnitt (wobei diese Beispiele nicht als beschränkend zu verstehen sind). Beispielsweise kann in einem solchen Fall über ein Ermitteln, für welchen der Modellkandidaten der Bewertungsparameter das vorgegebene Qualitätskriterium am besten erfüllt ermittelt werden, für welchen oder für welche Parameter ein Modellkandidat bessere (oder die besten) Voraussagen trifft.

In einer beispielhaften Ausführungsform umfasst das Verfahren:
- Erhalten, von Informationen, die eine Gruppe von Prozessparametern aus einer Mehrzahl von Prozessparametern repräsentieren, die für eine Auswahl von Prozessparametern (z.B. durch das Verfahren und/oder durch die zumindest eine Steuervorrichtung) für das mathematische Modell in Betracht kommen;
- Erhalten des zumindest einen Modellkandidaten für das mathematische Modell zum Voraussagen des zumindest eines Qualitätsmerkmals der zumindest einen Baustoffplatte für zumindest einen Prozessparameter aus der (z.B. ersten) Gruppe von Prozessparametern.

Eine Produktionsanlage zum Herstellen von Baustoffplatten umfasst typischerweise eine Mehrzahl von Produktionsabschnitten und/oder -Einheiten. Produktionsbedingungen, denen ein Zwischenprodukt beim Produzieren der zumindest einen Baustoffplatte bei/innerhalb eines solchen Produktionsabschnitts und/oder bei/innerhalb einer solchen Produktionseinheit ausgesetzt ist, können wiederum durch eine Mehrzahl von Prozessparametern bestimmt sein. Da beispielsweise entsprechende Sensoren und/oder Messeinrichtungen einer Produktionsanlage entsprechende Soll- und Istwerte für jeweilige Prozessparameter während einer Produktion ermitteln, und diese zumindest für jeweilige Baustoffplattenproben (für die im Labor Qualitätsmerkmale vermessen werden) in den Probedatensätzen gespeichert werden, können die Probedatensätze Soll- und Istwerte für eine große Anzahl (z. B. für bis zu oder sogar mehr als 2000 beispielsweise 3500, in einer typischen Produktionsanlage) von Prozessparametern enthalten.

Da aber nicht alle Prozessparameter einen gleich großen Einfluss auf resultierende Qualitätsmerkmale einer produzierten Baustoffplatte haben müssen, hat es sich als vorteilhaft herausgestellt, eine Vorauswahl von (typischerweise einigen Hundert, beispielsweise 250 bis 500) Prozessparametern zu treffen (eine Gruppe von Prozessparametern zu bestimmen), die bei einem Anpassen und/oder Erzeugen des mathematischen Modells (z.B. durch die zumindest eine Steuervorrichtung) in Betracht gezogen wird. Hierdurch kann insbesondere der Rechenaufwand, der für ein Anpassen und/oder Erzeugen des mathematischen Modells verwendet wird, kontrolliert und gegebenenfalls minimiert werden.

In einer beispielhaften Ausführungsform umfasst der Schritt des Erhaltens der Informationen, die die Gruppe von Prozessparametern aus einer Mehrzahl von Prozessparametern repräsentieren:
- Erhalten, der Informationen, die die Gruppe von Prozessparametern aus einer Mehrzahl von Prozessparametern repräsentieren, basierend auf einer Eingabe über die/eine Benutzerschnittstelle.

Hierdurch wird es möglich, dass eine Auswahl von Prozessparametern der Gruppe von Prozessparametern aus einer möglichen Gesamtzahl von Prozessparametern für eine Produktionsanlage durch einen Benutzer erfolgt, wodurch technische Erfahrung mit einer, oft komplexen, Produktionsanlage in vorteilhafter Weise mit berücksichtigt werden können. Auch wird einem Benutzer so die Möglichkeit gegeben, einen, beispielsweise besten, Modellkandidaten für eine Auswahl von Prozessparametern eines bestimmten Abschnitts der Produktionsanlage zu erhalten und/oder eine Auswahl von Prozessparametern, die sich im Betrieb der Produktionsanlage als grundsätzlich technisch relevant gezeigt hat.

In einer beispielhaften Ausführungsform wird ein Modellkandidat von zumindest zwei Modellkandidaten als mathematisches Modell für eine Verwendung beim Herstellen der zumindest einen Baustoffplatte bereitgehalten, in einem Fall, in dem aus zumindest zwei der zumindest zwei Modellkandidaten der Bewertungsparameter für den Modellkandidaten das Qualitätskriterium am besten erfüllt. Beispielsweise können basierend auf dem zumindest einen Trainingsdatensatz jeweilige Modellkandidaten für drei Prozessparameter erhalten werden, und es kann der Modellkandidat zur Voraussage von Qualitätsmerkmalen bei einer Produktion von Baustoffplatten ausgewählt werden, der das Qualitätskriterium am besten erfüllt. So kann in einer beispielhaften Ausführungsform das Verfahren ein Erhalten von zumindest zwei Modellkandidaten umfassen, wobei ein Modellkandidat von den zumindest zwei Modellkandidaten als mathematisches Modell für eine Verwendung beim Herstellen der zumindest einen Baustoffplatte bereitgehalten wird, in einem Fall, in der Bewertungsparameter für den Modellkandidaten das Qualitätskriterium am besten erfüllt.

Allerdings ist die Erfindung nicht auf diesen Fall beschränkt. Es hat sich gezeigt, dass es aus technischen Erwägungen, beispielsweise abhängig von einer Vorauswahl von Prozessparametern, vorteilhaft und/oder erforderlich sein kann, nicht den auszuwählen, der das Qualitätskriterium am besten erfüllt (sondern beispielsweise am zweitbesten, o.ä.).

In beispielhaften Ausführungsformen kann ein Ermitteln eines Modellkandidaten als mathematisches Modell zum Voraussagen von Qualitätsmerkmalen bei der Produktion von Baustoffplatten iterativ für zwei oder mehrere (beispielsweise Sätze von Modellkandidaten) durchgeführt werden. So kann beispielsweise in einem ersten Schritt für zwei oder mehr Prozessparameter ermittelt werden, für welchen dieser Prozessparameter und entsprechenden Modellkandidat, der zumindest eine Bewertungsparameter das Qualitätskriterium am besten (oder ggf. zweitbesten, etc.) erfüllt. Basierend darauf kann dann für die übrigen der zwei oder mehr Prozessparameter und für Modellkandidaten, bei denen dieser ermittelte Prozessparamete fest gesetzt ist, ermittelt werden, für welchen dieser übrigen Prozessparameter, der zumindest eine Bewertungsparameter des entsprechenden Modellkandidaten das Qualitätskriterium am besten (oder ggf. zweitbesten, etc.) erfüllt.

Mit anderen Worten umfasst das Verfahren in einer bevorzugten Ausführungsform weiter;
- Bestimmen von zumindest einem Prozessparameter als für das mathematische Modell (z.B. fest) gesetztem Prozessparameter (von zumindest einem Prozessparameter als für das mathematische Modell ausgewähltem Prozessparameter) des zumindest einen Trainingsdatensatzes für den aus zumindest zwei von zumindest zwei (beispielsweise vorherigen) Modellkandidaten, beispielsweise, in einem vorherigen Iterationsschritt, der Bewertungsparameter für den entsprechenden (beispielsweise vorherigen) Modellkandidaten das Qualitätskriterium am besten erfüllt;
- Erhalten, des zumindest einen Modellkandidaten für das mathematische Modell zum Voraussagen zumindest eines Qualitätsmerkmals einer Baustoffplatte für den zumindest einen Prozessparameter und für den zumindest einen für das mathematische Modell gesetzten Prozessparameter (für den zumindest einen für das mathematische Modell ausgewählten Prozessparameter).

Während in dieser Ausführungsform das Verfahren (und/oder die zumindest eine Steuervorrichtung) einen Prozessparameter als für das mathematische Modell gesetzten Parameter bestimmt, ist es in beispielhaften Ausführungsformen möglich, dass ein Benutzer eine Vorauswahl von Prozessparametern trifft, die in jedem Fall im mathematischen Modell enthalten sein soll.

In einer beispielhaften Ausführungsform umfasst das Verfahren daher weiter:
- Erhalten, von Informationen basierend auf einer Eingabe über die/eine Benutzerschnittstelle, die eine Auswahl von zumindest einem Prozessparameter aus einer Mehrzahl von Prozessparametern als zumindest einem fest vorgegebenen Prozessparameter (als zumindest einem für das mathematische Modell vorausgewähltem Prozessparameter) repräsentieren;
- Erhalten, des zumindest einen Modellkandidaten für das mathematische Modell zum Voraussagen zumindest eines Qualitätsmerkmals einer Baustoffplatte für den zumindest einen Prozessparameter, für den zumindest einen für das mathematische Modell gesetzten Prozessparameter, und für den zumindest einen fest vorgegebenen Prozessparameter.

Diese Ausführungsform ermöglicht es einem Benutzer, zumindest einen Prozessparameter, von dem der Benutzer beispielsweise aufgrund seiner Erfahrung mit einer Produktionsanlage weiß, dass dieser Prozessparameter einen großen und/oder vorteilhaften Einfluss auf das zumindest eine Qualitätsmerkmal der zumindest einen Baustoffplatte hat, in einer Vorauswahl für das mathematische Modell fest aufzunehmen, so dass dieser zumindest eine Parameter in dem Modell, dass für die Verwendung beim Herstellen der zumindest einen Baustoffplatte bereitgehalten wird, fest vorgegeben ist.

In einer beispielhaften Ausführungsform umfasst das Verfahren:
- Erhalten, beispielsweise basierend auf einer Eingabe über die/eine Benutzerschnittstelle, von Informationen, die einen Typ der zumindest einen Baustoffplatte repräsentieren und/oder von Informationen, die zumindest ein Qualitätsmerkmal einer Baustoffplatte repräsentieren; wobei das Verfahren weiter umfasst:
- Auswählen der Mehrzahl von Probedatensätzen zumindest basierend auf den Informationen, die den Typ der zumindest einen Baustoffplatte repräsentieren und/oder den Informationen, die das zumindest eine Qüalitätsmerkmal repräsentieren.

Probedatensätze können in beispielhaften Ausführungsformen typbezogen sein, d.h. Probedatensätze können für einen bestimmten Typ einer Baustoffplatte beispielsweise auf einem mit der zumindest einen Steuervorrichtung verbundenen Speichermedium gespeichert sein. Beispielsweise können typabhängig verschiedene Qualitätsmerkmale und/oder Prozessparameter in einem Probedatensatz enthalten sein. In dieser beispielhaften Ausführungsform kann wird somit einem Benutzer die Möglichkeit gegeben, beispielsweise bei einem Produktionswechsel, wenn die Produktion von einem Baustoffplattentyp auf einen anderen Baustoffplattentyp gewechselt wird, die zur Voraussage verwendeten Daten und/oder das zur Voraussage verwendete mathematische Modell geeignet einzustellen.

In beispielhaften Ausführungsformen umfasst die Benutzerschnittstelle:
- zumindest eine Tastatur und zumindest einen Bildschirm,
- ein oder mehrere Mittel zur Spracheingabe,
- ein oder mehrere Touchscreens, und/oder
- eine mit der Produktionsanlage verbundene mobile Vorrichtung, beispielsweise ein Smartphone, ein Tablett-Computer, einen Laptop.

In beispielhaften Ausführungsformen ist die Benutzerschnittstelle direktdrahtgebunden und/oder drahtlos - mit der Produktionsanlage und/oder mit der zumindest einen Steuervorrichtung verbunden und/oder beispielsweise über eine Internetverbindung. In beispielhaften Ausführungsformen umfasst eine Benutzerschnittstelle eine Anzeigevorrichtung wie einen oder mehrere Bildschirme und eine Eingabevorrichtung wie eine oder mehrere Tastaturen, eine Computermaus und/oder eine Eingabe-/Ausgabevorrichtung wie einen oder mehrere Touchscreens und/oder Mittel zur Spracheingabe. In beispielhaften Ausführungsformen umfasst die zumindest eine Steuervorrichtung eine mobile Vorrichtung wie ein oder mehrere Smartphones, einen oder mehrere Tablett-Computer und/oder einen oder mehrere Laptops, wobei eine Benutzerschnittstelle insbesondere in diesen Ausführungsformen einen oder mehrere Touchscreens einer mobilen Vorrichtung umfasst. Eine Verbindung der zumindest einen Steuervorrichtung über das Internet kann in vorteilhafter Weise eine Steuerung aus der Ferne durch einen Benutzer ermöglichen, was insbesondere dann vorteilhaft sein kann, wenn ein Benutzer für mehrere Produktionsanlagen verantwortlich ist.

In beispielhaften Ausführungsformen wird das mathematische Modell beim Steuern einer Produktionsanlage beim Herstellen einer Baustoffplatte verwendet. Beispielsweise können durch das mathematische Modell basierend auf Soll- oder Istwerten von Prozessparametern, die Prozessbedingungen eines gerade laufenden Produktionsprozesses charakterisieren, Voraussagewerte für Qualitätsmerkmale von Baustoffplatten erhalten werden, die mit dem Produktionsprozess hergestellt werden.

In einer beispielhaften Ausführungsform umfasst das Verfahren somit:
- Verwenden des mathematischen Modells zum Steuern einer Produktionsanlage beim Herstellen der zumindest einen Baustoffplatte, wobei das Verwenden umfasst:
- Erhalten, für den Modellkandidaten, der als mathematisches Modell für eine Verwendung beim Herstellen der zumindest einen Baustoffplatte bereitgehalten wird, von Soll- oder Istwerten, die zumindest einem Prozessparameter entsprechen, für den der Modellkandidat erzeugt wurde;
- Verwenden des mathematischen Modells zum Erhalten von Voraussagedaten, die eine Voraussage zumindest eines Qualitätsparameters für die Baustoffplatte repräsentieren basierend auf den Soll- oder Istwerten;
- Ausgeben der Voraussagedaten.

Hierbei kann ein Ausgeben der Voraussagedaten ein internes Ausgeben dieser Daten beispielsweise innerhalb der zumindest einen Steuervorrichtung umfassen, beispielsweise für eine weitere Verarbeitung der Daten durch die zumindest eine Steuervorrichtung. Ein Ausgeben der Voraussagedaten kann weiter ein Ausgeben der Voraussagedaten zur weiteren Verarbeitung durch eine (beispielsweise von der zumindest einen Steuervorrichtung) externe Vorrichtung umfassen. Beispielsweise können die ausgegebenen Voraussagedaten in der Steuervorrichtung oder in einer weiteren Datenverarbeitungseinrichtung in Anzeigedaten gewandelt werden, die von einer Anzeigevorrichtung (z.B. einem Bildschirm, der mit der Steuervorrichtung verbunden ist) zur Anzeige einer Repräsentation oder Darstellung verwendet werden kann.

So kann das Verfahren in einer beispielhaften Ausführungsform umfassen:
- Veranlassen einer Anzeige einer Repräsentation einer Voraussage des zumindest einen Qualitätsparameters an einer Anzeigevorrichtung, die mit der Produktionsanlage verbunden ist; und/oder
- Erzeugen von zumindest einem Steuersignal basierend auf den Voraussagedaten zum Steuern zumindest einer Komponente der Produktionsanlage.

Mit anderen Worten können die Voraussagedaten in einer beispielhaften Ausführungsform einerseits für eine Anzeige einer Repräsentation oder Darstellung einer Voraussage des zumindest einen Qualitätsparameters verwendet werden. Hierbei kann eine Repräsentation beispielsweise eine graphische Darstellung der Vöraussagedaten (beispielsweise eine Echtzeitdarstellung) in Form einer Datenwert-Zeit-Kurve auf einem Bildschirm umfassen, wobei der Bildschirm als Anzeigevorrichtung direkt oder indirekt mit der Steuervorrichtung und/oder der Produktionsanlage verbunden sein kann. Eine solche Anzeige der Voraussagedaten kann es einem Benutzer ermöglichen, die Produktionsanlage (z.B. in Echtzeit) in Reaktion auf die angezeigten Voraussagewerte der Qualitätsmerkmale einzustellen.

In alternativen oder zusätzlichen Ausführungsformen wird das basierend auf den Voraussagedaten erzeugte zumindest eine Steuersignal verwendet, zumindest eine Komponente der Produktionsanlage, beispielsweise unter Verwendung einer basierend auf einer Feedback-Schleife arbeitenden Steuerelektronik direkt zu Steuern.

Weitere vorteilhafte beispielhafte Ausführungsformen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Einschränkung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Produktionsanlage zum Herstellen einer Baustoffplatte und einer Steuervorrichtung;
- Fig. 2: ein beispielhaftes Flussdiagramm, das ein Verfahrens gemäß einer beispielhaften Ausführungsform des genannten Aspekts der Erfindung darstellt;
- Fig. 3: eine schematische Darstellung von beispielhaften Aspekten eines Schrittes des Einteilens einer Mehrzahl von Probedatensätzen in zumindest einen Trainingsdatensatz und zumindest einen Testdatensatz;
- Fig. 4A: ein beispielhaftes Flussdiagramm, das Schritte eines Verfahrens gemäß einer beispielhaften Ausführungsform des genannten Aspekts der Erfindung darstellt;
- Fig. 4B: ein beispielhaftes Flussdiagramm, das Schritte eines Verfahrens gemäß einer beispielhaften Ausführungsform des genannten Aspekts der Erfindung darstellt; und
- Fig. 5: eine schematische Darstellung einer beispielhaften Ausführungsform einer Vorrichtung gemäß dem genannten Aspekt der Erfindung, beispielsweise einer mobilen Vorrichtung.

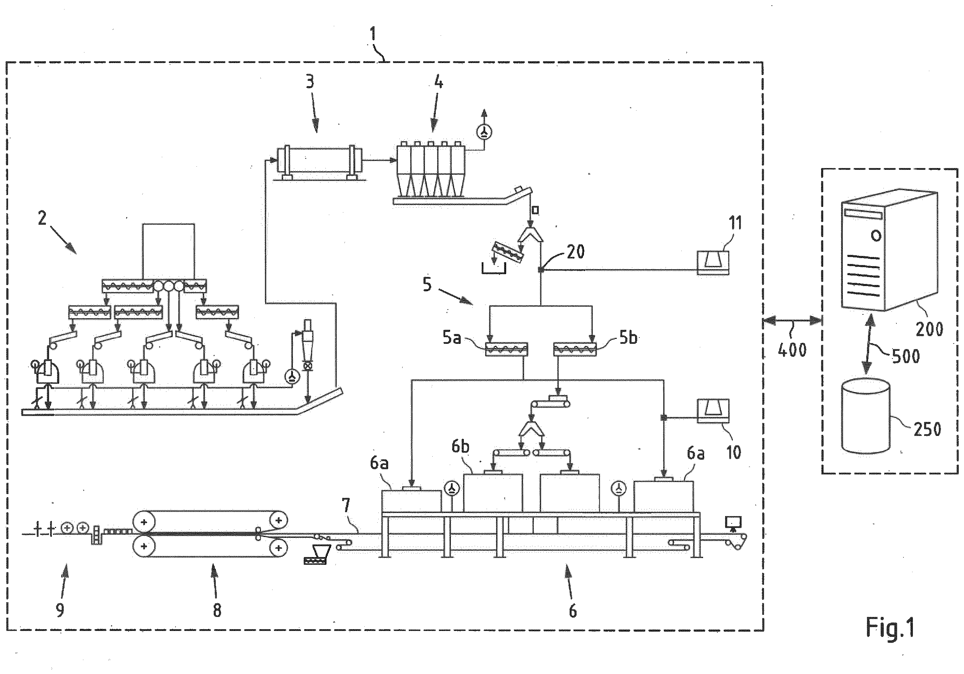

Fig. 1 zeigt eine schematische Darstellung einer beispielhaften Produktionsanlage 1 zum Herstellen einer Werkstoffplatte aus Spanmaterial als illustratives Beispiel einer Baustoffplatte im Einklang mit der vorliegenden Offenbarung. Fig. 1 zeigt weiter eine schematische Darstellung einer Steuervorrichtung 200, die mit der Produktionsanlage 1 zum Steuern der Produktionsanlage 1 beispielsweise über die schematisch dargestellte Verbindung 400 verbunden ist. Dazu kann die Steuervorrichtung 200 eingerichtet sein, die Schritte des Verfahrens gemäß des genannten Aspekts der Erfindung auszuführen. Die Steuervorrichtung 200 kann dazu beispielsweise eine Verarbeitungsanlage wie einen Computer und/oder ein Computersystem umfassen, das mit (nicht dargestellten) Sensoren und/öder Messeinrichtungen der Produktionsanlage 1 verbunden ist, beispielsweise von solchen Sensoren und/oder Messeinrichtungen Soll-und/oder Istwerte von Prozessparametern von Abschnitten oder Einheiten der Produktionsanlage 1 zu erhalten. Alternativ oder zusätzlich kann die Steuervorrichtung 200 in beispielhaften Ausführungsformen eine oder mehrere mobile Vorrichtungen, beispielsweise ein oder mehrere Smartphones, ein oder mehrere Tablett-Computer, und/oder ein oder mehrere Laptops umfassen.

Die Steuervorrichtung 200 umfasst in beispielhaften Ausführungsformen eine oder mehrere Anzeigevorrichtungen, wie beispielsweise einen oder mehrere Bildschirme, und/oder ist mit einer oder mehreren Anzeigevorrichtungen verbunden um beispielsweise eine Anzeige des zumindest einen Qualitätsmerkmals beispielsweise einer in Produktion befindlichen Baustoffplatte anzuzeigen.

In beispielhaften Ausführungsformen kann die Steuervorrichtung 200 mehrere Steuervorrichtungen umfassen von denen eine einzelne Steuervorrichtung einen oder mehrere Schritte des Verfahrens gemäß dem genannten Aspekt der vorliegenden Erfindung ausführen kann. So kann es beispielsweise möglich sein, dass die in Fig. 1 nur schematisch dargestellte Steuervorrichtung 200 eine Verarbeitungseinheit wie beispielsweise einen oder mehrere Computer umfasst, der mit Sensoren und/oder Messeinrichtungen der Produktionsanlage 1 (drahtlos, drahtgebunden, und/oder über eine Internetverbindung) verbunden ist, und beispielsweise eine mobile Vorrichtung, die zumindest mit der Verarbeitungseinheit (drahtlos, drahtgebunden, und/oder über eine Internetverbindung) verbunden ist. So kann in möglich sein, dass beispielsweise insbesondere Schritte, die eine Anzeige und/oder eine Eingabe von Daten umfassen, in beispielhaften Ausführungsformen eine Anzeige und/oder Eingabe von Daten unter Verwendung (beispielsweise eines Touchscreens) eines mobilen Geräts wie eines Smartphones umfassen.

Fig. 1 zeigt weiter eine Speichervorrichtung (beispielsweise eine oder mehrere Festplatten und/oder einer oder mehrere Cloud-Speichereinheiten), die beispielsweise zum Speichern von Probedatensätzen vorgesehen sein kann und dazu über die schematisch dargestellte Verbindung 500 mit der Steuervorrichtung 200 verbunden ist.

In beispielhaften Ausführungsformen umfassen Verbindungen im Einklang mit der vorliegenden Offenbarung, insbesondere die schematisch dargestellten Verbindungen 400 zwischen der Steuervorrichtung 200 und der Produktionsanlage 1 (beispielsweise zwischen der Steuervorrichtung 200 und einem oder mehreren Sensoren, Messeinrichtungen und/oder Steuercontrollern der Produktionsanlage 1) und 500 insbesondere direkte oder indirekte drahtgebundene Kommunikations-Verbindungen (beispielsweise LAN-Verbindungen), und/oder direkte oder indirekte drahtlose Kommunikations-Verbindungen umfassend Funk-Verbindungen wie Bluetooth, NFC, WLAN, 4G oder 5G und/oder Kommunikations-verbindungen über das Internet.

Fig. 1 zeigt ein Schema mit Einheiten, Abschnitten oder Aggregaten der Produktionsanlage 1, die bei Herstellung der Baustoffplatten dienen können. Insbesondere sind folgende Abschnitte der Produktionsanlage 1 dargestellt, die für einzelne Produktionsschritte zur Herstellung einer Baustoffplatte verwendet werden können, dargestellt: ein Zerspaner 2, ein Trockner für Späne 3, eine Sichteinrichtungen 4, eine Vorrichtung zur Versehung der Späne mit einem Bindemittel mit Mischer 5a, 5b, die stellvertretend auch für andere Vorrichtungen stehen, mit denen Bindemittel auf die Späne gebracht wird, ferner Streueinrichtungen 6, die die beleimten Späne ggf. in mehreren Lagen unterschiedlicher Spangrößen aus mehreren Streuköpfen 6a, 6b auf ein Formportband 7 zu einer Matte streuen, eine kontinuierliche Presse 8 und eine Schneid- oder Fräseinrichtung 9 zur Dimensionierung der fertigen Baustoffplatten.

Dabei stehen die Zerspaner 2 auch symbolisch allgemein für die Zerkleinerung von Holz zu Spänen. In der Figur sind beispielhaft fünf Messerringzerspaner angedeutet, die aus einem darüber liegenden Bunker über. Förderschnecken gespeist werden., Diese können je nach Messereinstellung unterschiedliche Spangrößen erzeugen. Die erzeugten Späne unterschiedlicher Größe und Feuchtigkeit werden an den Trockner 3 weitergeleitet.

Die sich in der Figur anschließende Sichteinrichtung 4 kann in unterschiedlichen Ausführungen an verschiedenen Herstellpunkten Verwendung finden. Diese Einrichtung kann verwendet werden, um Feinpartikel (z.B. Staub) bzw. Grobpartikel (z.B. unerwünschte Mineralien oder Leimlumpen) aus dem Fluss der Späne auszusondern. Sichteinrichtungen 4 können auch genutzt werden, um beispielsweise bei der Streuung bereits eine Fraktionierung nach der Spangröße zu erwirken, so dass unterschiedliche Schichten der späteren Baustoffplatte aus unterschiedlich großen Spänen erzeugt werden können.

In dem Ausführungsbeispiel gemäß Fig. 1 werden beispielsweise zwei unterschiedliche Spangrößenbereiche erzeugt, die aus Bunkern jeweils einem Mischer 5a und einem Mischer 5b zugeführt werden. In diesen Mischern werden die Späne zumindest teilweise mit Bindemittel benetzt.

So ist es möglich, den Streuköpfen 6a für die Deckschichten der zu streuenden und zu verpressenden Matte andere Spangrößen zuzuführen als den Streuköpfen 6b für die Mittelschicht(en).

Die Doppelbandpresse 8, wie sie zur Herstellung von Baustoffplatten, insbesondere Baustoffplatten aus Holzwerkstoffen verwendet wird, weist in ihrem grundsätzlichen Aufbau ein Pressenoberteil mit oberer beheizbarer Druckplatte und ein Pressenunterteil mit unterer beheizbarer Druckplatte auf. Rahmen, in denen auch Druckgeber zur Druckgebung abgestützt sind, verbinden das Pressenoberteil und das Pressenunterteil. Im Pressenoberteil sowie im Pressenunterteil sind endlos umlaufende Stahlbänder unter Bildung eines Pressspaltes für die Druck- und Temperaturbeaufschlagung der Matte um Bandumlenktrommeln geführt.

Ferner erkennt man in Fig. 1 auch eine Spangrößenmesseinrichtung 10 (ein Beispiel einer Messeinrichtung) nach dem Mischer 5. Optional kann auch eine Spangrößenmesseinrichtung 11 vor dem Mischer vorgesehen sein. In diese Spangrößenmesseinrichtung 10,11 kann eine repräsentative Auswahl von Spänen, beispielsweise eine sehr kleine, aus dem Transportprozess an einer Probenentnahmestelle 20 ausgeschleuste Spanmenge vermessen werden. Beispielhafte Prozessparameter, die in einem Zusammenhang mit solchen durch die Spangrößenmesseinrichtung vermessenen Spänen stehen können sind beispielsweise eine Zuführmenge von Bindemittel über Leimdüsen, eine Zuführmenge von Spänen, und/oder eine Durchschleusungsgeschwindigkeit von Spänen durch den Mischer 5a, 5b, eine Drehzahl einer Welle eines Mischers 5a, 5b, etc.

Ein Verfahren gemäß dem genannten Aspekt der vorliegenden Offenbarung kann im Zusammenhang mit einer Produktionsanlage gemäß Fig. 1 ausgeführt werden, wobei es sich versteht, dass die vorliegende Erfindung aber nicht auf die Produktionsanlage gemäß Fig. 1 eingeschränkt ist.

Gemäß beispielhafter Ausführungsformen können Prozessparameter insbesondere Prozessparameter der Holzwerkstoffproduktion sein, beispielsweise Prozessparameter eines Zerfaserung und Beleimungsabschnitts einer Produktionsanlage zur Herstellung von Holzwerkstoffplatten, insbesondere ein oder mehrere Prozessparameter umfassen, die ausgewählt sind zumindest aus:
- Quetschwassermenge;
- Dampfzugabe Kocher;
- Füllstand Kocher;
- Temperatur Kocher;
- Dampfdruck Kocher;
- Kochzeit;
- Hackschnitzelmenge;
- Paraffinzugabe;
- Energieaufnahme Refiner;
- Temperatur Refiner;
- Dampfdruck Refiner;
- Mahlspalt Refiner;
- Mahlscheibenalter;
- Blasventilöffnung;
- pH-Wert der Fasern;
- Leimmenge.

In beispielhaften Ausführungsformen können Prozessparameter eines Mattenformungsabschnitts einer Produktionsanlage zur Herstellung von Holzwerkstoffplatten, insbesondere ein oder mehrere Prozessparameter umfassen, die ausgewählt sind zumindest aus:
- Faseraustragsmenge;
- Streuhöhe;
- Formbandgeschwindigkeit;
- Flächengewicht Matte;
- Mattenfeuchte;
- Streubreite;
- Vorpressdrücke;
- Vorpressdistanzen;
- Besäumbreite;
- Mattendichte;
- Sprühwassermenge;
- Mattenhöhe Formbandende;
- Mattentemperatur;
- Bedüsungshöhe;
- Fehlschüttung.

Für solche Prozessparameter können in einer Produktionsanlage entsprechende Sensoren und/oder Messeinrichtungen vorgesehen sein, so dass diesen Prozessparametern entsprechend eingestellte Sollwerte, bzw. Istwerte über entsprechende Kommunikationsverbindungen der zumindest einen Steuervorrichtung zur Verfügung gestellt werden können.

Insbesondere ist es möglich, dass beispielsweise gemessene und/oder eingestellte Soll-, bzw. Istwerte bei einer Produktion einer Baustoffplatte zusammen mit entsprechenden Zeitstempeln gespeichert werden, so dass für eine produzierte Baustoffplatte die entsprechenden Prozessparameterwerte zu den jeweiligen Zeitpunkten zur Verfügung stehen. Wie beschrieben können für Baustoffplattenproben, die beispielsweise für eine Vermessung im Labor ausgeschleust werden können zusätzlich noch Messwerte für Qualitätsmerkmale erhalten werden, die zusammen mit den Prozessparameterwerten in einem Probedatensatz für die entsprechende Baustoffplattenprobe gespeichert werden können.

Gemäß beispielhafter Ausführungsformen sind Qualitätsmerkmale, die eine Baustoffplatte charakterisieren können, insbesondere ein oder mehrere Qualitätsmerkmale, die ausgewählt sind zumindest aus:
- Querzugfestigkeit;
- Rohdichte;
- Biegefestigkeit;
- Dickenquellung.

So umfasst ein Probedatensatz für eine Baustoffplattenprobe in beispielhaften Ausführungsformen Daten (Prozessparameterdaten), die zumindest einen Wert (z.B. Soll- und/oder Istwert) für zumindest einen entsprechenden Prozessparameter mit zugehörigem Zeitstempel repräsentieren, und Daten (Qualitätsparameterdaten), die zumindest einen Wert (z.B. Messwert und/oder Labormesswert) für zumindest ein entsprechendes Qualitätsmerkmal einer Baustoffplattenprobe repräsentieren.

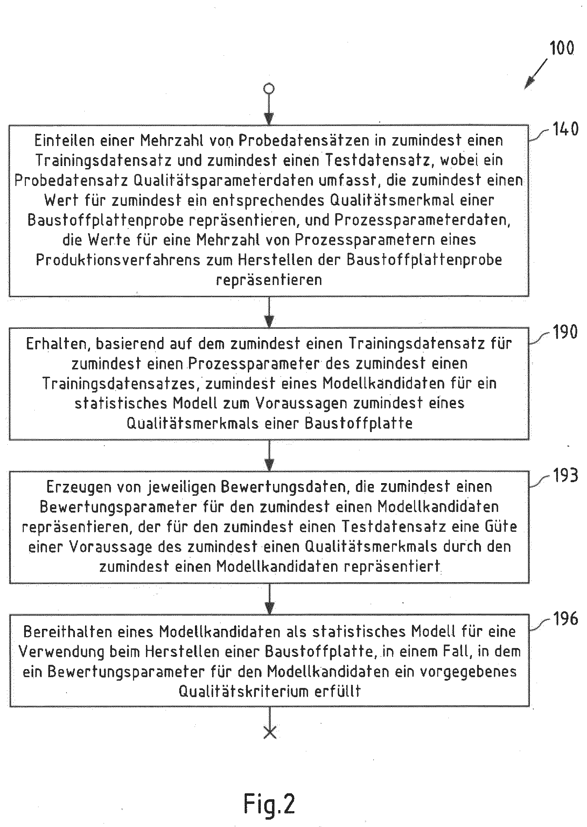

Fig. 2 ist ein beispielhaftes Flussdiagramm, das eine beispielhafte Ausführungsform des Verfahrens 100 gemäß dem genannten Aspekt der vorliegenden Erfindung darstellt. Das Flussdiagramm 100 kann als Veranschaulichung eines beispielhaften Steuerprozesses zum Steuern einer Produktionsanlage zum Herstellen von zumindest einer Baustoffplatte, beispielsweise der Produktionsanlage 1 gemäß Fig. 1 verstanden werden. Ohne Beschränkung der Erfindung darauf, wird im Folgenden davon ausgegangen, dass Verfahren 100 durch die Steuervorrichtung 200 gemäß Fig. 1 ausgeführt wird. Allerdings kann Verfahren 100 in anderen beispielhaften Ausführungsführungsformen von einem oder mehreren Prozessoren der Steuervorrichtung 200 ausgeführt werden, und/oder von mehreren Steuervorrichtungen, wobei beispielsweise einer oder mehrere Prozessoren und/oder eine oder mehrere der Steuervorrichtungen einen oder mehrere Schritte des Verfahrens 100 ausführen kann.

Wie in Fig. 2 dargestellt, umfasst das Verfahren 100 einen Schritt 140 des Einteilens einer Mehrzahl von Probedatensätzen in zumindest einen Trainingsdatensatz und zumindest einen Testdatensatz, wobei ein Probedatensatz Qualitätsparameterdaten umfasst, die zumindest einen Wert für zumindest ein entsprechendes Qualitätsmerkmal einer Baustoffplattenprobe repräsentieren, und Prozessparameterdaten, die. Werte für eine Mehrzahl von Prozessparametern eines Produktionsverfahrens zum Herstellen der Baustoffplattenprobe repräsentieren.

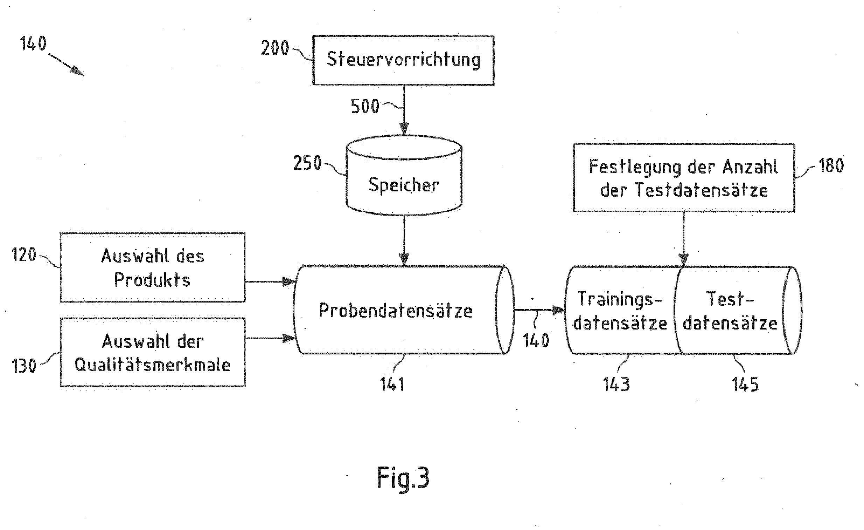

Aspekte von Schritt 140 sind rein schematisch in Fig. 3 veranschaulicht. Gemäß Schritt 140 ist die Steuervorrichtung 200 somit eingerichtet, eine Anzahl von Probedatensätzen 141, die beispielsweise in dem Speichermedium 250 gespeichert sind (auf dem Speichermedium 250 bereitgehalten werden), beispielsweise in eine Anzahl (z.B. 10) von Testdatensätzen 141 und eine Anzahl (z.B. 90) von Trainingsdatensätzen 143 einzuteilen. In beispielhaften Ausführungsformen ist die Steuervorrichtung 200 eingerichtet, die Probedatensätze 141 basierend auf einer Eingabe durch eine mit der Steuervorrichtung 200 verbundene (nicht dargestellte) Benutzerschnittstelle entsprechend einzuteilen. Ein Benutzer kann z.B. im in Fig. 3 dargestellten Schritt 180 die Anzahl der Testdatensätze 143 festlegen.

Beispielsweise kann in einer beispielhaften Ausführungsform der Benutzer eine Benutzerschnittstelle in Form einer Tastatur, einer Computermaus und eines Bildschirms (nicht dargestellt) verwenden, um der Steuervorrichtung 200 (über eine direkte Verbindung oder über eine Remoteverbindung über das Internet) Daten zu übermitteln, die eine vom Benutzer vorgegebene Anzahl (z.B. 10) von Testdatensätzen repräsentieren. Die Steuervorrichtung 200 kann dann beispielsweise eine Anzahl (beispielsweise 100) von auf dem Speichermedium 250 für einen zu produzierenden Baustoffplattentyp gespeicherten Probedatensätzen 141 in eine Anzähl von Testdatensätzen 143, die der vom Benutzer erhaltenen Anzahl entspricht, und in eine Anzahl von Trainingsdatensätzen 145, die der Anzahl der übrigen Probedatensätzen 141 entspricht.

Wie ebenfalls in Fig. 3 beispielhaft dargestellt, kann der Benutzer, beispielsweise unter Verwendung der genannten Benutzerschnittstelle, in einem Schritt 120 einen Produkttyp vorgeben und in einem Schritt 130 Qualitätsmerkmale vorgeben. Die Steuervorrichtung 200 ist in dieser Ausführungsform eingerichtet, basierend auf entsprechenden über die Eingabe erhaltenen Informationen, die den Typ der zumindest einen Baustoffplatte repräsentieren und/oder die die Qualitätsmerkmale repräsentieren, die Mehrzahl von Probedatensätzen (141) aus einer Anzahl von auf dem Speichermedium 250 gespeicherten Probedatensätzen auszuwählen. Beispielsweise bei einem Produktionswechsel wird dem Benutzer so die Möglichkeit gegeben, die zur Voraussage verwendeten Daten und/oder das zur Voraussage verwendete mathematische Modell geeignet einzustellen.

Wieder mit Bezug auf Fig. 2, umfasst das Verfahren 100 einen Schritt 190 eines Erhaltens, basierend auf dem zumindest einen Trainingsdatensatz für zumindest einen Prozessparameter des zumindest einen Trainingsdatensatzes, zumindest eines Modellkandidaten für ein mathematisches Modell zum Voraussagen zumindest eines Qualitätsmerkmals von zumindest einer Baustoffplatte.

Die Steuervorrichtung 200 kann dazu beispielsweise eingerichtet sein, für eine Anzahl von Trainingsdatensätzen und eine Anzahl von in den Trainingsdatensätzen enthaltenen Prozessparameterh entsprechende Gleichungssysteme zu lösen und so Koeffizienten oder Gewichte eines mathematischen Modells (beispielsweise eines auf dem 3SLS-Verfahren basierendes mathematisches Modell) zu ermitteln, welches dann dem genannten Modellkandidaten für die Anzahl der Prozessparameter (für den zumindest einen Prozessparameter des zumindest einen Trainingsdatensatzes) entspricht.

Fig. 2 zeigt weiter einen Schritt 193 des Verfahrens 100 des Erzeugens von jeweiligen Bewertungsdaten, die zumindest einen Bewertungsparameter für den zumindest einen Modellkandidaten repräsentieren, der für den zumindest einen Testdatensatz eine Güte einer Voraussage des zumindest einen Qualitätsmerkmals durch den zumindest einen Modellkandidaten repräsentiert.

Dazu kann die Steuervorrichtung 200 beispielsweise eingerichtet sein, unter Verwendung des in Schritt 190 erhaltenen Modellkandidaten (z.B. unter Verwendung von entsprechend ermittelten Gewichten/Koeffizienten) einen Wert eines Qualitätsmerkmals der Baustoffplagge vorauszusagen, also einen entsprechenden Voraussagewert zu berechnen. Das Qualitätsmerkmal kann hierfür in beispielhaften Ausführungsformen vom Benutzer über die Benutzerschnittstelle vorgegeben sein. Die Steuervorrichtung 200 kann weiter eingerichtet sein, den berechneten Voraussagewert mit einem entsprechenden Wert des Qualitätsmerkmal aus einem oder mehreren der Testdatensätze zu vergleichen. Dazu kann die Steuervorrichtung 200 beispielsweise einen statistischen Parameter (z.B. einen mittleren Fehler, einen maximalen Fehler, einen mittleren absoluten Fehler, einen quadratischen Fehler, etc.) berechnen, der eine Differenz zwischen dem berechneten Voraussagewert des Qualitätsmerkmals und dem Wert des Qualitätsmerkmals aus dem einen oder den mehreren Testdatensätzen darstellt/charakterisiert. Die Steuervorrichtung 200 ist in beispielhaften Ausführungsformen eingerichtet, den Bewertungsparameter für den zumindest einen Modellkandidaten basierend auf einem oder mehreren der so berechneten statistischen Parameter zu berechnen (und beispielsweise so die Bewertungsdaten zu erzeugen).

Insbesondere die Erzeugung der Bewertungsdaten basierend auf einem solchen direkten Vergleich von Voraussagewerten von Qualitätsmerkmalen mit tatsächlichen Messwerten dieser Qualitätsmerkmale hat sich als vorteilhaft gegenüber beispielsweise einer Bewertung des Modells nur über statistische Parameter herausgestellt, da die Bewertung so genauer an die tatsächlichen Produkte und die entsprechenden Produktionsbedingungen gekoppelt ist

Wieder mit Bezug auf Fig. 2 umfasst das Verfahren 100 weiter einen Schritt 196 des Bereithaltens (z.B. Speicherns) eines Modellkandidaten als mathematisches Modell für eine Verwendung beim Herstellen einer Baustoffplatte, in einem Fall, in dem ein Bewertungsparameter für den Modellkandidaten ein vorgegebenes Qualitätskriterium erfüllt.

Ein vorgegebenes Qualitätskriterium kann in beispielhaften Ausführungsformen einem Bewertungsschwellwert entsprechen, der in beispielhaften Ausführungsformen von dem Benutzer über die Benutzerschnittstelle vorgegeben werden kann. Beispielsweise kann in diesem Fall ein Bewertungsparameter für einen Modellkandidaten ein vorgegebenes Qualitätskriterium erfüllen, wenn der Wert des Bewertungsparameters über oder unter dem Bewertungsschwellwert liegt.

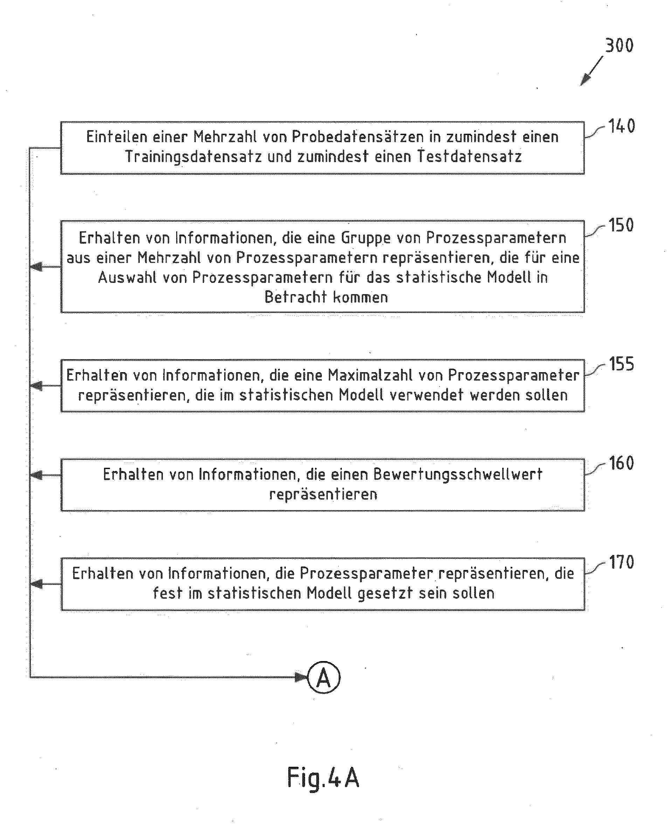

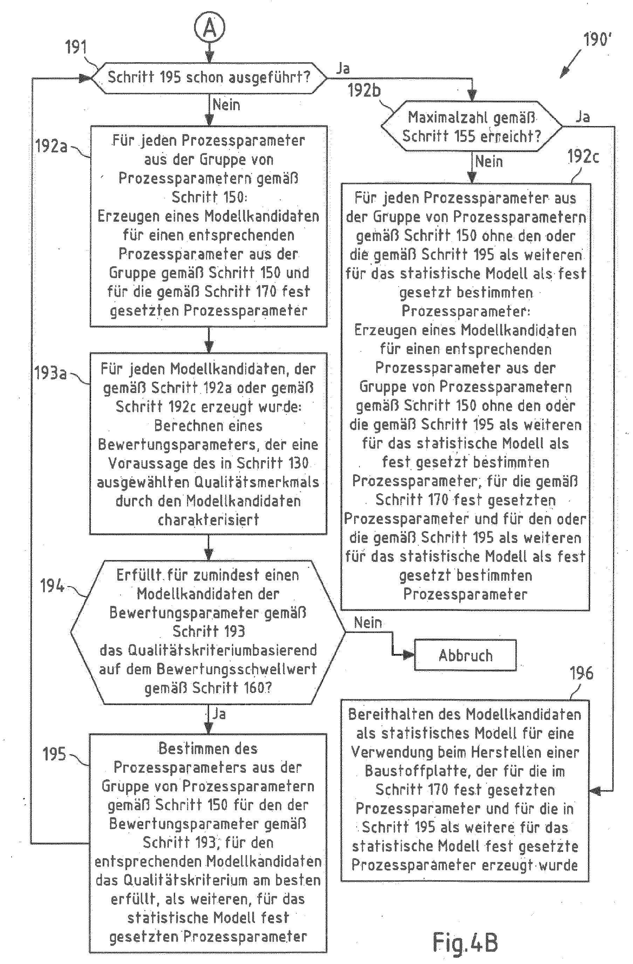

Die Flussdiagramme der Figuren 4A und 4B stellen ein Verfahren 300 als weitere beispielhafte Ausführungsform des Verfahrens gemäß dem genannten Aspekt der Erfindung dar. Diese Flussdiagramme können als Veranschaulichung eines weiteren beispielhaften Steuerprozesses zum Steuern einer Produktionsanlage zum Herstellen einer Baustoffplatte, beispielsweise der Produktionsanlage 1 gemäß Fig. 1 verstanden werden. Ohne Beschränkung der Erfindung darauf, wird im Folgenden davon ausgegangen, dass das Verfahren 300 durch die Steuervorrichtung 200 gemäß Fig. 1 ausgeführt wird. Allerdings kann das Verfahren 300 in anderen beispielhaften Ausführungsführungsformen von einem oder mehreren Prozessoren der Steuervorrichtung 200 ausgeführt werden, und/oder von mehreren Steuervorrichtungen, wobei beispielsweise einer oder mehrere Prozessoren und/oder eine oder mehrere der Steuervorrichtungen (200) einen oder mehrere Schritte des Verfahrens 300 ausführen kann. Hierbei ist insbesondere die Reihenfolge der Verfahrensschritte 150 bis 170 gemäß Fig. 4A nicht als beschränkend zu verstehen und eine andere Abfolge dieser Verfahrensschritte ist in weiteren beispielhaften Ausführungsformen möglich.

Mit Bezug auf Fig. 4A umfasst das Verfahren 300 zunächst einen Schritt 140 des Einteilen einer Mehrzahl von Probedatensätzen in zumindest einen Trainingsdatensatz und zumindest einen Testdatensatz, der Schritt 140 des Verfahrens 100 gemäß Fig. 2 entspricht.

Das Verfahren 300 umfasst weiter einen Schritt 150 des Erhaltens von Informationen, die eine Gruppe von Prozessparameter repräsentieren, die für eine Auswahl von Prozessparametern für das mathematische Modell in Betracht kommen.

Wie in der vorliegenden Spezifikation offenbart, kann eine große Anzahl von Prozessparametern in Betracht kommen, die für eine Modellierung eines Produktionsprozesses einer Produktionsanlage zur Herstellung von Baustoffplatten verwendet werden kann (z. B. bis zu oder sogar mehr als 3500 im Falle von typischen Produktionsanlagen). Insbesondere um eine Modellierung eines Produktionsprozesses und/oder eine Erzeugung eines entsprechenden mathematischen Modells in effizienter Weise zu ermöglichen, hat es sich als vorteilhaft herausgestellt, eine geeignete Vorauswahl an Prozessparametern bereitzustellen, die für eine Erzeugung eines neuen mathematischen Modells und/oder für ein Trainieren eines bestehenden mathematischen Modells verwendet werden. Eine solche Vorauswahl kann insbesondere durch eine geeignete Auswahl von Prozessparametern durch den Benutzer unter Verwendung der Benutzerschnittstelle realisiert werden. Mit anderen Worten kann Schritt 150 basierend auf einer Benutzereingabe mittels einer Benutzerschnittstelle durch die Steuervorrichtung durchgeführt werden.

Gemäß Fig. 4A umfasst das Verfahren 300 weiter einen Schritt 155 des Erhaltens von Informationen, die eine Maximalzahl von Prozessparameter repräsentieren, die im mathematischen Modell verwendet werden sollen, beispielsweise basierend auf einer Benutzereingabe unter Verwendung der Benutzerschnittstelle.

Die Maximalzahl kann beispielsweise aufgrund von Benutzererfahrung eingestellt werden, und kann so gewählt sein, dass ein entsprechendes mathematisches Modell, das mit dieser Anzahl von Prozessparametern erzeugt wurde, zufriedenstellende Voraussagen trifft. Die Maximalzahl kann sich aus einer Anzahl von einem oder mehreren Prözessparametern zusammensetzen, die, beispielsweise von einem Benutzer, fest vorausgewählt sind, und aus einer Anzahl von einem oder mehreren Prozessparametern, die aus der Gruppe von Prozessparametern gemäß Schritt 150 ausgewählt werden.

Das Verfahren 300 umfasst weiter einen Schritt 150 des Erhaltens von Informationen, die einen Bewertungsschwellwert repräsentieren. Schritt 150 kann beispielsweise basierend auf einer Benutzereingabe unter Verwendung der Benutzerschnittstelle von der Steuervorrichtung 200 ausgeführt werden.

Weiter umfasst das Verfahren 300 einen Schritt 170 des Erhaltens von Informationen, die Prozessparameter repräsentieren, die fest im mathematischen Modell gesetzt sein sollen (die im mathematischen Modell enthalten sein sollen). Schritt 170 kann beispielsweise basierend auf einer Benutzereingabe unter Verwendung der Benutzerschnittstelle von der Steuervorrichtung 200 ausgeführt werden. Mit anderen Worten wird es einem Benutzer ermöglicht, über die Benutzerschnittstelle Prozessparameter vorzugeben, die jedenfalls im mathematischen Modell enthalten sein sollen. Hierdurch wird es möglich, dass der Benutzer technologische Erfahrung einfließen lassen kann, beispielsweise aufgrund vorheriger Verwendung der Produktionsanlage zum Herstellen von Baustoffplatten. Dies ist von Vorteil, da aufgrund der großen Anzahl von an einer Produktionsanlage vorkommenden Prozessparametern und aufgrund der Abhängigkeiten von Prozessparametern untereinander ein rein automatisiertes Verfahren zum Auswählen von Prozessparametern unter Umständen Prozessparameter ignorieren würde, die aber trotzdem eine Voraussage eines Qualitätsmerkmals basierend auf dem mathematischen Modell vorteilhaft unterstützen.

Wie mit Bezugszeichen 190' in Fig. 4B angedeutet, schließt sich an die Schritte 150 bis 170 ein Schritt 190' an, der dem Schritt 190 gemäß Fig. 2 entsprechen kann, und der durch eine und/oder innerhalb von einer Gruppe von Verfahrensschritten des Verfahrens 300 realisiert werden kann, die in Fig. 4B beispielhaft dargestellt ist. Wie hier dargestellt, wird in einem Schritt 191 des Verfahrens 300 zunächst geprüft, ob Schritt 195 des Verfahrens 300 schon ausgeführt wurde. Mit anderen Worten wird in diesem Schritt geprüft, ob eine durch die Verfahrensschritte 191 bis 195 beschriebene Schleife des Verfahrens 300 schon einmal durchlaufen wurde.

Wie dargestellt, schließt sich im Fall "Nein" (erstes Durchlaufen der Schleife) ein Schritt 192a des Verfahrens 300 an. Dieser Schritt 192a wird für jeden Prozessparameter aus der Gruppe von Prozessparametern gemäß Schritt 150 ausgeführt. Dies ist so zu verstehen, dass für jeden Prozessparameter der Gruppe, die beispielsweise ein Benutzer aus einer Gesamtmenge an Prozessparametern ausgewählt hat, das Verfahren 300 ein Erzeugen eines Modellkandidaten für einen entsprechenden Prozessparameter aus der Gruppe gemäß Schritt 150 und für die fest gesetzten Prozessparameter gemäß Schritt 170 umfasst. Hat ein Benutzer beispielsweise in Schritt 150 eine Anzahl von 90 Prozessparametern für die Gruppe von Prozessparametern ausgewählt, und im Schritt 170 10 Prozessparameter, die fest für das mathematische Modell gesetzt sein sollen, dann ist die Steuervorrichtung 200 eingerichtet, im Schritt 192a jeweils einen Modellkandidaten für einen der 90 Prozessparameter aus Schritt 150 und für alle der 10 gemäß Schritt 170 fest gesetzten Prozessparameter, insgesamt somit für 11 Prozessparameter, zu erzeugen. Im genannten (nicht einschränkend zu verstehenden) Beispiel wäre die Steuervorrichtung 200 somit eingerichtet, insgesamt 90 Modellkandidaten basierend auf jeweils 11 Prozessparametern zu erzeugen.

Es ist hierbei zu bemerken, dass in weiteren beispielhaften Ausführungsformen der Schritt 192a für Untergruppen von zumindest zwei Prozessparametern (z.B. für Gruppen aus zwei oder drei Prozessparametern) aus der Gruppe von Prozessparametern gemäß Schritt 150 ausgeführt werden kann. Das heißt, dass in diesen beispielhaften Ausführungsformen für jede Untergruppe von Prozessparametern der Gruppe gemäß Schritt 150, das Verfahren 300 ein Erzeugen eines Modellkandidaten für eine entsprechende Untergruppe aus der Gruppe gemäß Schritt 150 und für die Prozessparameter gemäß Schritt 170 umfasst.

Wieder mit Bezug auf die Ausführungsform der Fig. 4B wird in einem Schritt 193a des Verfahrens 300 für jeden Modellkandidaten, der gemäß Schritt 192a (erstes Durchlaufen der Schleife) (beispielsweise für jeden der genannten 90 Modellkarididaten) oder der gemäß Schritt 192c erzeugt wurde (ein nächstes Durchlaufen der Schleife) ein Bewertungsparameter berechnet, der eine Voraussage des in Schritt 130 ausgewählten Qualitätsmerkmals durch den Modellkandidaten charakterisiert. Dieser Schritt 193a entspricht im Wesentlichen Schritt 193 des Verfahrens 100 gemäß Fig. 2, so dass die Steuervorrichtung 200 in beispielhaften Ausführungsformen eingerichtet ist, wie mit Bezug auf Schritt 193 der Fig. 2 beschrieben, den Bewertungsparameter für die Modellkandidaten, die in Schritt 192a (oder Schritt 192c) erzeugt wurden, basierend auf einem oder mehreren der mit Bezug auf Fig. 2 beschriebenen statistischen Parameter zu berechnen.

In einem Schritt 194 des Verfahrens 300 wird bestimmt, ob für zumindest einen Modellkandidaten (der in Schritt 192a oder in Schritt 192c erzeugt wurde) der Bewertungsparameter gemäß Schritt 193 das Qualitätskriterium basierend auf dem Bewertungsschwellwert gemäß Schritt 150 erfüllt. Falls dies für keinen Modellkandidaten gegeben ist, bricht das Verfahren 300 ab.

Falls dies für zumindest einen Modellkandidaten gegeben ist, wird gemäß einem Schritt 195 des Verfahrens 300 der Prozessparameter aus der Gruppe von Prozessparametern gemäß Schritt 150, für den der Bewertungsparameter gemäß Schritt 193 für den entsprechenden Modellkandidaten das Qualitätskriterium am besten erfüllt, als weiterer, für das mathematische Modell fest gesetzter Prozessparameter bestimmt.

Es ist hierbei zu bemerken, dass in den genannten weiteren beispielhaften Ausführungsformen, in denen der Schritt 192a für Untergruppen von zumindest zwei Prozessparametern ausgeführt wird, auch die Schritte 193a bis 195 (sowie die Schritte 196 und 192c) für diese Untergruppen durchgeführt werden können.

Wie im Flussdiagramm der Fig. 4B weiter veranschaulicht, wird im Anschluss an Schritt 195 gemäß Schritt 191 geprüft, ob Schritt 195 des Verfahrens 300 schon ausgeführt wurde, woran sich nach dem beschriebenen Durchlauf der Schritte 192a bis 195 ein Schritt 192b des Verfahrens 300 anschließt, gemäß welchem geprüft wird, ob die Maximalzahl gemäß Schritt 155 erreicht ist.

Falls dies der Fall ist, wird gemäß einem Schritt 196 des Verfahrens 300 der Modellkandidat für den der Bewertungsparameter gemäß Schritt 193 das Qualitätskriterium am besten erfüllt, als mathematisches Modell für eine Verwendung beim Herstellen einer Baustoffplatte bereitgehalten, beispielsweise im Speichermedium 250 für diese Verwendung gespeichert. Dieser Modellkandidat wurde nach dem Verfahren 300 einerseits für die gemäß Schritt 170 fest gesetzten Prozessparameter, und andererseits für den in Schritt 195 als weiterer, für das mathematische Modell fest gesetzter Prozessparameter erzeugt. Dieser Modellkandidat ist ein (nicht einschränkendes) Beispiel für einen Modellkandidaten der gemäß dem genannten Aspekt der vorliegenden Erfindung als mathematisches Modell für eine Verwendung beim Herstellen einer Baustoffplatte bereitgehalten wird, in einem Fall, in dem ein Bewertungsparameter für den Modellkandidaten ein vorgegebenes Qualitätskriterium erfüllt.

Falls in Schritt 192b des Verfahrens 300 festgestellt wird, dass die Maximalzahl gemäß Schritt 155 nicht erreicht ist, wird ein Schritt 192c des Verfahrens 300 für jeden Prozessparameter aus der Gruppe von Prozessparametern gemäß Schritt 150 ohne den oder die gemäß Schritt 195 als weiteren für das mathematische Modell als fest gesetzt bestimmten Prozessparameter ausgeführt.

Hat ein Benutzer beispielsweise in Schritt 150 eine Anzahl von 90 Prozessparametern für die Gruppe von Prozessparametern ausgewählt, und im Schritt 170 10 Prozessparameter, die fest für das mathematische Modell gesetzt sein sollen, dann ist die Steuervorrichtung 200 eingerichtet, nachdem im Schritt 195 ein Prozessparameter als weiterer Prozessparameter für das mathematische Modell fest gesetzt bestimmt wurde, den Schritt 192c für die 89 übrigen Prozessparameter aus der Gruppe gemäß Schritt 150 auszuführen, die (ggf. noch) nicht als weitere fest für das mathematische Modell gesetzte Prozessparameter bestimmt wurden.

Gemäß Schritt 192c umfasst das Verfahren 300 somit für jeden der übrigen Prozessparameter aus der Gruppe von Prozessparametern gemäß Schritt 150 ein Erzeugen eines Modellkandidaten für einen entsprechenden Prozessparameter aus der Gruppe von Prozessparametern gemäß Schritt 150 ohne den oder die gemäß Schritt 195 als weiteren für das mathematische Modell als fest gesetzt bestimmten Prozessparameter, sowie für die gemäß Schritt 170 fest gesetzten Prozessparameter und für den oder die gemäß Schritt 195 als weiteren für das mathematische Modell als fest gesetzt bestimmten Prozessparameter.

Hat somit ein Benutzer beispielsweise in Schritt 150 eine Anzahl von 90 Prozessparametern für die Gruppe von Prozessparametern ausgewählt, und im Schritt 170 10 Prozessparameter, die fest für das mathematische Modell gesetzt sein sollen, dann ist die Steuervorrichtung 200 eingerichtet, im Schritt 192c für jeden einzelnen aus den 89 übrigen Prozessparametern aus der Gruppe gemäß Schritt 150, für die 10 Prozessparameter, die gemäß Schritt 170 fest für das mathematische Modell gesetzt sind, und für den Prozessparameter, der gemäß Schritt 190 als weiterer für das mathematische Modell als fest gesetzt bestimmt wurde, jeweils einen Modellkandidaten zu erzeugen.

Wie in Fig. 4B weiter gezeigt, schließen sich nun die beschriebenen Schritte 193a, 194 und 195 an, die für die Modellkandidaten (im beschriebenen, nicht einschränkenden. Beispiel für die 89 Modellkandidaten) ausgeführt werden, die in Schritt 192c erzeugt wurden. Insbesondere kann in Schritt 195 ein weiterer Prozessparameter aus der Gruppe von Prozessparameter gemäß Schritt 150 als fest für das mathematische Modell gesetzter Prozessparameter gesetzt werden. Nach weiterem Durchlauf der Schritte 191 ("Ja") und 192b ("Ja"), kann sich dann wieder Schritt 196 anschließen, in dem der entsprechende Modellkandidat als mathematisches Modell für eine Verwendung beim Herstellen einer Baustoffplatte bereitgehalten wird. Nach einem beispielhaften zweimaligen Durchlaufen der beschriebenen Schleife von Schritten wird dieser Modellkandidat einerseits für die gemäß Schritt 170 fest gesetzten Prozessparameter, und andererseits für zwei (nach zweimaligem Durchlauf von Schritt 195) als weitere, für das mathematische Modell fest gesetzte Prozessparameter, als mathematisches Modell erzeugt und für die genannte Verwendung bereitgehalten (beispielsweise im Speichermedium 250 gespeichert). Dieser Modellkandidat ist ein weiteres (nicht einschränkendes) Beispiel für einen Modellkandidaten der gemäß dem genannten Aspekt der vorliegenden Erfindung als mathematisches Modell für eine Verwendung beim Herstellen einer Baustoffplatte bereitgehalten wird, in einem Fall, in dem ein Bewertungsparameter für den Modellkandidaten ein vorgegebenes Qualitätskriterium erfüllt.

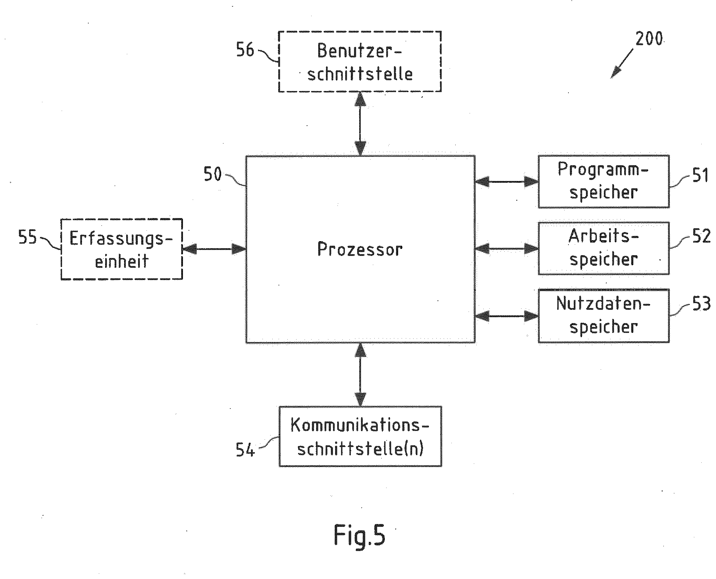

Fig. 5 ist eine schematische Darstellung einer beispielhaften Ausführungsform einer Steuervorrichtung 200 die eingerichtet ist, das Verfahren gemäß dem genannten Aspekt der Erfindung auszuführen. Die Steuervorrichtung 200 kann beispielsweise von einer Steuervorrichtung einer Produktionsanlage umfasst sein.

Die Steuervorrichtung 200 umfasst einen Prozessor 50, einen Programmspeicher 51, einen Arbeitsspeicher 52, einen Nutzdatenspeicher 200, eine oder mehrere Kommunikationsschnittelle(n) 54, eine Erfassungseinheit 55 beispielsweise zur Erfassung von Ist- oder Sollwerten für einen oder mehrere Prozessparameter und eine Benutzerschnittstelle 56.

Der Prozessor 50 führt beispielsweise ein Programm zur Durchführung des genannten Verfahrens gemäß dem genannten Aspekt der Erfindung aus, das in dem Programmspeicher 51 gespeichert ist. Arbeitsspeicher 52 dient insbesondere der Speicherung temporärer Daten während des Ablaufs dieses Programms.

Der Nutzdatenspeicher 250 dient der Speicherung von Daten, die bei der Abarbeitung des Programms erforderlich sind und kann dem Speichermedium 250 der Figuren 1 und 3 entsprechen.

Die Kommunikationsschnittstelle(n) 54 umfassen eine oder mehrere Schnittstellen zur Kommunikation der Vorrichtung insbesondere mit der Produktionsanlage 1 und/oder zumindest mit Teilen (beispielsweise einem oder mehreren Sensoren und/oder einer oder mehrerer Messeinrichtungen) der Produktionsanlage 1. Die Schnittstelle kann auf einer drahtgebundenen und/oder drahtlosen (beispielsweise auf zellularem Mobilfunk (z.B. GSM, E-GSM, UMTS, LTE, 5G) oder auf WLAN (Wireless Local Area Network)) beruhen.

Die Benutzerschnittstelle 56 kann als Bildschirm und Tastatur oder als berührungsempfindliche Anzeige (Touchscreen) ausgestaltet sein. Die Benutzerschnittstelle 56 kann direkt (beispielsweise drahtgebunden) mit Prozessor 50 und/oder der Steuervorrichtung 200 verbunden sein, und/oder (es können mehrere Benutzerschnittstellen 56 vorgesehen sein) über eine drahtgebundene und/oder drahtlose (z.B. auf GSM, E-GSM, UMTS, LTE, 5G und/oder auf WLAN (Wireless Local Area Network) Technologie beruhende) Kommunikationsverbindung, beispielsweise eine Internetverbindung umfassende Kommunikationsverbindung mit Prozessor 50 und/oder der Steuervorrichtung 200 verbunden sein. Im letzteren Fall kann so eine Remoteverbindung zur Steuervorrichtung 200 ermöglicht werden, die es beispielsweise einem Benutzer ermöglicht, aus der Ferne auf die Steuervorrichtung 200 zuzugreifen, und so ggf. mehrere Steuervorrichtungen 200 zu bedienen.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten oder dergleichen bedeutet im Zusammenhang dieser Spezifikation mehrere Einheiten oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren (100), beispielsweise ausgeführt durch zumindest eine Vorrichtung (50, 300) oder ein System umfassend zumindest zwei Vorrichtungen (50, 300), wobei das Verfahren (100) umfasst:
- Einteilen (140) einer Mehrzahl von Probedatensätzen (141) in zumindest einen Trainingsdatensatz (143) und zumindest einen Testdatensatz (145), wobei ein Probedatensatz Qualitätsparameterdaten (220) umfasst, die zumindest einen Wert für zumindest ein entsprechendes Qualitätsmerkmal einer Baustoffplattenprobe repräsentieren, und Prozessparameterdaten (210), die Werte für eine Mehrzahl von Prozessparametern eines Produktionsverfahrens zum Herstellen der Baustoffplattenprobe repräsentieren;
- Erhalten (190, 190'), basierend auf dem zumindest einen Trainingsdatensatz (143) für zumindest einen Prozessparameter des zumindest einen Trainingsdatensatzes (143), zumindest eines Modellkandidaten für ein mathematisches Modell zum Voraussagen zumindest eines Qualitätsmerkmals einer Baustoffplatte;
- Erzeugen (193) von jeweiligen Bewertungsdaten, die zumindest einen Bewertungsparameter für den zumindest einen Modellkandidaten repräsentieren, der für den zumindest einen Testdatensatz eine Güte einer Voraussage des zumindest einen Qualitätsmerkmals durch den zumindest einen Modellkandidaten repräsentiert;
- Bereithalten (196) eines Modellkandidaten als mathematisches Modell für eine Verwendung beim Herstellen von zumindest einer Baustoffplatte, in einem Fall, in dem ein Bewertungsparameter für den Modellkandidaten ein vorgegebenes Qualitätskriterium erfüllt.

2. Das Verfahren (100) gemäß Anspruch 1, wobei das Verfahren weiter umfasst:
- Erhalten (150) von Informationen, die eine Gruppe von Prozessparametern aus einer Mehrzahl von Prozessparametern repräsentieren, die für eine Auswahl von Prozessparametern für das mathematische Modell in Betracht kommen;
- Erhalten des zumindest einen Modellkandidaten für das mathematische Modell zum Voraussagen des zumindest eines Qualitätsmerkmals der zumindest einen Baustoffplatte für zumindest einen Prozessparameter aus der Gruppe von Prozessparametern.

3. Das Verfahren (100) gemäß einem der Ansprüche 1 oder 2, wobei ein Modellkandidat von zumindest zwei Modellkandidaten als mathematisches Modell für eine Verwendung beim Herstellen der zumindest einen Baustoffplatte bereitgehalten wird, in einem Fall, in dem aus zumindest zwei der zumindest zwei Modellkandidaten der Bewertungsparameter für den Modellkandidaten das Qualitätskriterium am besten erfüllt.

4. Das Verfahren (100) gemäß einem der Ansprüche 1 bis 3, weiter umfassend:
- Bestimmen von zumindest einem Prozessparameter als für das mathematische Modell gesetzten Prozessparameter des zumindest einen Trainingsdatensatzes (143) für den aus zumindest zwei von zumindest zwei Modellkandidaten der Bewertungsparameter für den entsprechenden Modellkandidaten das Qualitätskriterium am besten erfüllt;
- Erhalten, des zumindest einen Modellkandidaten für das mathematische Modell zum Voraussagen zumindest eines Qualitätsmerkmals einer Baustoffplatte für den zumindest einen Prozessparameter und für den zumindest einen für das mathematische Modell gesetzten Prozessparameter.

5. Das Verfahren (100) gemäß Anspruch 4, wobei das Verfahren weiter umfasst:
- Erhalten (170) von Informationen basierend auf einer Eingabe über eine Benutzerschnittstelle, die eine Auswahl von zumindest einem Prozessparameter aus einer Mehrzahl von Prozessparametern als zumindest einem fest vorgegebenen Prozessparameter repräsentieren;
- Erhalten, des zumindest einen Modellkandidaten für das mathematische Modell zum Voraussagen zumindest eines Qualitätsmerkmals einer Baustoffplatte für den zumindest einen Prozessparameter, für den zumindest einen für das mathematische Modell gesetzten Prozessparameter, und für den zumindest einen fest vorgegebenen Prozessparameter.

6. Das Verfahren (100) gemäß einem der Ansprüche 1 bis 5, weiter umfassend:
Erhalten (120, 130) von Informationen, die einen Typ der zumindest einen Baustoffplatte repräsentieren; wobei das Verfahren weiter umfasst:
- Auswählen der Mehrzahl von Probedatensätzen (141) zumindest basierend auf den Informationen, die den Typ der zumindest einen Baustoffplatte repräsentieren.

7. Das Verfahren (100) gemäß einem der Ansprüche 1 bis 6, weiter umfassend:
- Erhalten (120, 130) von Informationen, die zumindest ein Qualitätsmerkmal einer Baustoffplatte repräsentieren; wobei das Verfahren weiter umfasst:
- Auswählen der Mehrzahl von Probedatensätzen (141) zumindest basierend auf den Informationen, die das zumindest eine Qualitätsmerkmal repräsentieren.

8. Das Verfahren (100) gemäß einem der Ansprüche 1 bis 7, weiter umfassend:
- Erhalten für den zumindest einen Testdatensatz eines entsprechenden Voraussagewerts für das zumindest eine Qualitätsmerkmal durch den zumindest einen Modellkandidaten;
- Bestimmen zumindest eines Parameters, der eine Differenz zwischen dem Voraussagewert für das zumindest eine Qualitätsmerkmal und einem Qualitätswert, der das zumindest eine Qualitätsmerkmal repräsentiert, charakterisiert;
- Bestimmen des Bewertungsparameters basierend auf dem zumindest einen Parameter.

9. Das Verfahren (100) gemäß einem der Ansprüche 1 bis 8, weiter umfassend:
- Erhalten (180) von Informationen basierend auf einer Eingabe über eine Benutzerschnittstelle, die eine vorgegebene Anzahl von Testdatensätzen repräsentieren, wobei der Schritt des Einteilens (140) der Mehrzahl von Probedatensätzen (141) in zumindest einen Trainingsdatensatz (143) und zumindest einen Testdatensatz (145) umfasst:
- Einteilen (140) der Mehrzahl von Probedatensätzen (141) in zumindest einen Trainingsdatensatz (143) und zumindest einen Testdatensatz (145), wobei eine Anzahl von Testdatensätzen (145), der vorgegebenen Anzahl von Testdatensätzen (145) entspricht.

10. Das Verfahren (100) gemäß einem der Ansprüche 8 oder 9, wobei der zumindest eine Parameter einem statistischem Parameter entspricht, der ausgewählt ist aus:
• Maximaler Fehler;
• Mittlerer absoluter Fehler;
• Quadratischer Fehler.

11. Das Verfahren (100) gemäß einem der Ansprüche 1 bis 10, weiter umfassend:
- Erhalten (150) basierend auf einer Eingabe über eine Benutzerschnittstelle, von Informationen, die einen Bewertungsschwellwert repräsentieren, wobei ein Modellkandidat das vorgegebene Qualitätskriterium erfüllt, wenn der Bewertungsparameter für den Modellkandidaten über dem Bewertungsschwellwert liegt, wenn der Bewertungsschwellwert ein Minimalwert ist, oder wenn der Bewertungsparameter für den Modellkandidaten unter dem Bewertungsschwellwert liegt, wenn der Bewertungsschwellwert ein Maximalwert ist.

12. Das Verfahren (100) gemäß einem der Ansprüche 1 bis 11, wobei das Verfahren durch zumindest eine Steuervorrichtung (200) einer Produktionsanlage zum Herstellen von Baustoffplatten oder durch ein System, das zumindest eine solche Steuervorrichtung (200) umfasst, ausgeführt wird, wobei die Produktionsanlage zumindest einen Sensor und/oder eine Messeinrichtung aufweist, der und/oder die eingerichtet ist, zumindest einen Sensormesswert und/oder einen Messwert der Messeinrichtung als Soll- oder Istwert eines entsprechenden Prozessparametes auszugeben, der eine entsprechende Prozessbedingung beim Herstellen der zumindest einen Baustoffplatte durch die Produktionsanlage charakterisiert.

13. Das Verfahren (100) gemäß einem der Ansprüche 1 bis 12, weiter umfassend:
- Verwenden des mathematischen Modells zum Steuern einer Produktionsanlage beim Herstellen der zumindest einen Baustoffplatte, wobei das Verwenden umfasst:
- Erhalten, für den Modellkandidaten, der als mathematisches Modell für eine Verwendung beim Herstellen der zumindest einen Baustoffplatte bereitgehalten wird, von Soll- oder Istwerten, die zumindest einem Prozessparameter entsprechen, für den der Modellkandidat erzeugt wurde;
- Verwenden des mathematischen Modells zum Erhalten von Voraussagedaten, die eine Voraussage zumindest eines Qualitätsparameters für die zumindest eine Baustoffplatte repräsentieren basierend auf den Soll- oder Istwerten;
- Ausgeben der Voraussagedaten.

14. Das Verfahren (100) nach Anspruch 13, weiter umfassend:
- Veranlassen einer Anzeige einer Repräsentation einer Voraussage des zumindest einen Qualitätsparameters an einer Anzeigevorrichtung, die mit der Produktionsanlage verbunden ist; und/oder
- Erzeugen von zumindest einem Steuersignal basierend auf den Voraussagedaten zum Steuern zumindest einer Komponente der Produktionsanlage und/oder zum Einstellen zumindest eines Prozessparameters der Produktionsanlage bei einem Herstellen der zumindest einen Baustoffplatte.

15. Das Verfahren (100) nach einem der Ansprüche 1 bis 14, wobei das mathematische Modell ein simultanes Gleichungsmodell umfasst, insbesondere ein auf dem Dreistufigen-Kleinste-Quadrate-Verfahren, basierendes mathematisches Modell, ein auf dem Zweistufigen-Kleinste-Quadrate-Verfahren ("Two-stage least squares", "2SLS") basierendes mathematisches Modell, ein auf dem Partial-Least-Squares (PLS) basierendes mathematisches Modell, und/oder ein lineares Regressionsmodell.

16. Vorrichtung (50, 300) oder System aus zumindest zwei Vorrichtungen (50, 300), eingerichtet zur Ausführung und/oder Steuerung des Verfahrens (100) nach einem der Ansprüche 1-15 oder umfassend jeweilige Mittel zur Ausführung und/oder Steuerung der Schritte des Verfahrens (100) nach einem der Ansprüche 1-15.

17. Computerprogramm, umfassend Programmanweisungen, die einen Prozessor (50) oder mehrere Prozessoren (50) zur Ausführung und/oder Steuerung des Verfahrens (100) gemäß einem der Ansprüche 1-15 veranlassen, wenn das Computerprogramm auf dem Prozessor (50) oder den mehreren Prozessoren (50) ausgeführt wird.
